(19) Europäisches Patentamt
European Patent Office
Office européen des brevets

(11) **EP 4 482 191 A1**

(12) **EUROPEAN PATENT APPLICATION**
published in accordance with Art. 153(4) EPC

(43) Date of publication:
**25.12.2024 Bulletin 2024/52**

(51) International Patent Classification (IPC):
*H04W 24/00* (2009.01)    *H04W 76/00* (2018.01)
*H04W 52/02* (2009.01)    *H04W 24/08* (2009.01)

(21) Application number: **22925451.1**

(22) Date of filing: **14.02.2022**

(52) Cooperative Patent Classification (CPC):
**H04W 24/00; H04W 24/08; H04W 52/02;
H04W 76/00**

(86) International application number:
**PCT/CN2022/076240**

(87) International publication number:
**WO 2023/151089 (17.08.2023 Gazette 2023/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **HU, Ziquan**
 **Beijing 100085 (CN)**
• **LI, Yanhua**
 **Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **MEASUREMENT METHOD AND APPARATUS**

(57)    The present disclosure provides a measurement method and apparatus, which can be applied to a mobile communication technology. The method comprises: a terminal device acquiring a measurement value of a target measurement, wherein the target measurement comprises beam failure detection (BFD) (201); and determining, according to the measurement value and reference information corresponding to the target measurement, a target event triggered by the terminal device, wherein the target event comprises a relaxation-entering event or a relaxation-exiting event (202). Therefore, whether the terminal device triggers the relaxation-entering event can be effectively determined according to the measurement value of the target measurement and the reference information corresponding to the target measurement, so that when the terminal device triggers the relaxation-entering event, the relaxation-entering event can be reported to a network device to implement a relaxation mechanism, thereby improving the battery life of the terminal device.

acquiring a measured value of a target measurement, the target measurement including a beam failure detection (BFD) — 201

determining a target event to be triggered by the terminal device according to the measured value and reference information corresponding to the target measurement, the target event including a relaxation entry event or a relaxation exit event — 202

FIG. 2

## Description

### FIELD

The present invention relates to the field of communication technology, and more particularly to a measurement method and apparatus.

### BACKGROUND

The relaxation mechanism is introduced in R17. That is, the relaxation mechanism may be implemented for terminal devices that meet the relaxation criteria. For example, the measurement interval for a terminal device to periodically measure the downlink reference signal may be lengthened to reduce the power consumption and improve the battery life of the terminal device. Therefore, how to detect events triggered by a terminal device to determine whether the terminal equipment can implement the relaxation mechanism is very important.

### SUMMARY

In a first aspect of embodiments of the present invention, there is provided a measurement method. The measurement method is performed by a terminal device, and includes: acquiring a measured value of a target measurement; and determining a target event to be triggered by the terminal device according to the measured value and reference information corresponding to the target measurement. The target measurement includes a beam failure detection (BFD), and the target event includes a relaxation entry event or a relaxation exit event.

In this technical solution, the measured value of the target measurement is acquired, the target measurement includes the beam failure detection (BFD), the target event to be triggered by the terminal device is determined according to the measured value and the reference information corresponding to the target measurement, and the target event includes the relaxation entry event or the relaxation exit event. In this way, whether the terminal device triggers the relaxation entry event can be effectively determined according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

In a second aspect of embodiments of the present invention, there is provided a measurement method. The measurement method is performed by a network device, and includes: receiving a target event sent by a terminal device. The target event is determined according to a measured value of a target measurement and reference information corresponding to the target measurement, the target measurement includes a beam failure detection (BFD), and the target event includes a relaxation entry event or a relaxation exit event.

In a third aspect of embodiments of the present invention, there is provided a measurement apparatus, which has some or all of functions of the terminal device for implementing the method as described in the first aspect above. For example, the measurement apparatus may have functions as described in some or all of the embodiments in the present invention, or may also have functions to separately implement any of embodiments in the present invention. The functions may be implemented by hardware, or may be implemented by software executed on corresponding hardware. The hardware or the software includes one or more units or modules corresponding to the above functions.

In a fourth aspect of embodiments of the present invention, there is provided a measurement apparatus, which has some or all of functions of the network device for implementing the method as described in the second aspect above. For example, the measurement apparatus may have functions as described in some or all of the embodiments in the present invention, or may also have functions to separately implement any of embodiments in the present invention. The functions may be implemented by hardware, or may be implemented by software executed on corresponding hardware. The hardware or the software includes one or more units or modules corresponding to the above functions.

In a fifth aspect of embodiments of the present invention, there is provided another measurement apparatus. The measurement apparatus includes a processor that, when calling a computer program in a memory, performs the method as described in the first aspect above, or performs the method as described in the second aspect above.

In a sixth aspect of embodiments of the present invention, there is provided another measurement apparatus, which includes a processor and a memory having stored therein a computer program. The processor, when executing the computer program, performs the method as described in the first aspect above, or performs the method as described in the second aspect above.

In a seventh aspect of embodiments of the present invention, there is provided another measurement apparatus, which includes a processor and an interface circuit. The interface circuit is used to receive code instructions and transmit the code instructions to the processor, and the processor is used to run the code instructions to cause the measurement apparatus to perform the method as described in the first aspect above, or perform the method as described in the second aspect above.

In an eighth aspect of embodiments of the present invention, there is provided a communication system. The communication system includes the measurement apparatus as described in the third aspect, the measurement apparatus as described in the fourth aspect, the measurement apparatus as described in the fifth aspect, the measurement apparatus as described in the sixth aspect, or the measurement apparatus as described in the seventh aspect.

In a ninth aspect of embodiments of the present invention, there is provided a computer-readable storage medium. The computer-readable storage medium is configured to store instructions to be used by the above terminal device, and the instructions, when executed, cause the terminal device to perform the method as described in the first aspect above. Alternatively, the computer-readable storage medium is configured to store instructions to be used by the above network device, and the instructions, when executed, cause the network device to perform the method as described in the second aspect above.

In a tenth aspect of embodiments of the present invention, there is provided a computer program product including a computer program that, when run on a computer, causes the computer to implement the method as described in the first aspect above or the method as described in the second aspect above.

In an eleventh aspect of embodiments of the present invention, there is provided a chip system, which includes at least one processor and an interface, for supporting a terminal device to implement functions involved in the first aspect, or for supporting a network device to implement functions involved in the second aspect, for example, for determining or processing at least one of data and information involved in the above method. In a possible design, the chip system further includes a memory for storing computer programs and data necessary for the terminal device or the network device. The chip system may consist of chips, or may include chips and other discrete devices.

In a twelfth aspect of embodiments of the present invention, there is provided a computer program that, when running on a computer, causes the computer to execute the method described in the first aspect above, or causes the computer to execute the method described in the second aspect above.

## BRIEF DESCRIPTION OF THE DRAWINGS

In order to clearly illustrate the technical solutions in embodiments of the present invention or in the related art, drawings to be used for the description of embodiments of the present invention or the related art are described below.

FIG. 1 is a schematic architecture diagram of a communication system according to embodiments of the present invention;
FIG. 2 is a schematic flowchart of a measurement method according to embodiments of the present invention;
FIG. 3 is a schematic flowchart of another measurement method according to embodiments of the present invention;
FIG. 4 is a schematic flowchart of another measurement method according to embodiments of the present invention;
FIG. 5 is a schematic flowchart of another measurement method according to embodiments of the present invention;
FIG. 6 is a schematic flowchart of another measurement method according to embodiments of the present invention;
FIG. 7 is a schematic flowchart of another measurement method according to embodiments of the present invention;
FIG. 8 is a schematic flowchart of another measurement method according to embodiments of the present invention;
FIG. 9 is a schematic flowchart of another measurement method according to embodiments of the present invention;
FIG. 10 is a schematic flowchart of another measurement method according to embodiments of the present invention;
FIG. 11 is a schematic flowchart of another measurement method according to embodiments of the present invention;
FIG. 12 is a schematic flowchart of another measurement method according to embodiments of the present invention;
FIG. 13 is a schematic flowchart of another measurement method according to embodiments of the present invention;
FIG. 14 is a schematic flowchart of another measurement method according to embodiments of the present invention;
FIG. 15 is a schematic flowchart of another measurement method according to embodiments of the present invention;
FIG. 16 is a schematic flowchart of another measurement method according to embodiments of the present invention;
FIG. 17 is a schematic flowchart of another measurement method according to embodiments of the present invention;
FIG. 18 is a schematic block diagram of a measurement apparatus according to embodiments of the present invention.
FIG. 19 is a schematic block diagram of another measurement apparatus according to embodiments of the present invention.
FIG. 20 is a schematic block diagram of a chip according to embodiments of the present invention.

## DETAILED DESCRIPTION

For better understanding of the measurement method according to embodiments of the present invention, a communication system to which embodiments of the present invention is applicable is firstly described below.

In order to make purposes, technical solutions and advantages of the present invention clearer, implementations of the present invention will be further described in detail below with reference to the accompanying drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present invention. Instead, they are merely examples of apparatuses and methods consistent with some aspects of the present invention as recited in the appended claims.

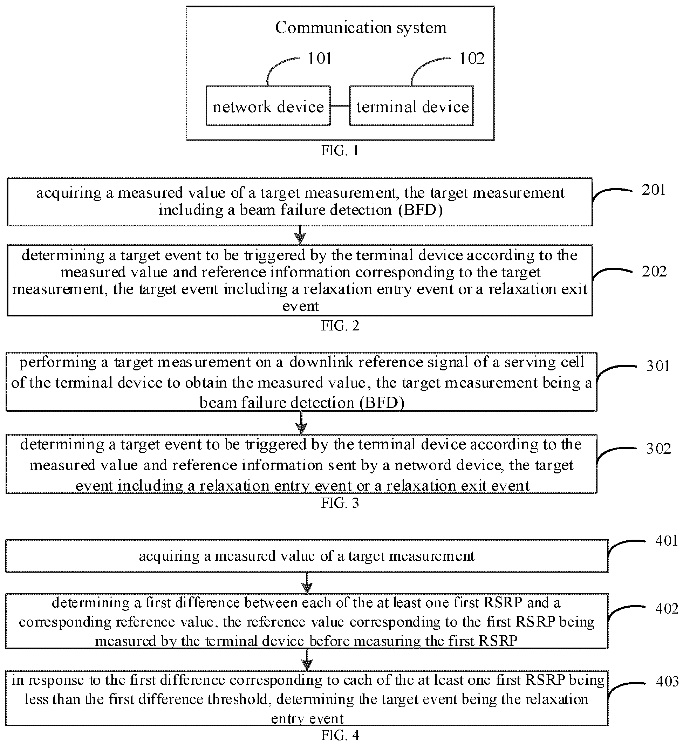

Referring to FIG. 1, FIG. 1 is a schematic architecture diagram of a communication system according to embodiments of the present invention. The communication system may include, but not limited to, a network device and a terminal device. The number and forms of the devices shown in FIG. 1 are only used as an example and do not constitute a limitation on embodiments of the present invention. In practical applications, the communication system may include two or more network devices and two or more terminal devices. As an example for illustration, the communication system shown in FIG. 1 includes a network device 101 and a terminal device 102.

It should be noted that the technical solutions according to embodiments of the present invention may be applied to various communication systems, for example, a long term evolution (LTE) system, a 5th generation (5G) mobile communication system, a 5G new radio (NR) system, or other new mobile communication systems in the future.

The network device 101 in embodiments of the present invention is an entity at a network side for sending or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present invention do not limit the specific technique and specific device form adopted by the network device. The network device according to embodiments of the present invention may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal device 102 in embodiments of the present invention is an entity at a user side for receiving or sending signals, such as a mobile phone. The terminal device may also be called a terminal, a user equipment (UE), a mobile station (MS), a mobile terminal (MT), and so on. The terminal device may be a device with a communication function, such as a car, a smart car, a mobile phone, a wearable device, a tablet Pad, a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in smart grid, a wireless terminal device in transportation safety, a wireless terminal device in smart city, a wireless terminal device in smart home, etc. Embodiments of the present invention do not limit the specific technique and the specific device form adopted by the terminal device.

In the above communication system, for a terminal device that satisfies a relaxation metric, such as a terminal device that is in a static state (or a low movement state) and/or has a good channel state, the terminal device can perform beam failure detection (BFD), radio link monitor (RLM), and radio resource management (RRM) relaxation mechanisms. For example, a terminal device that satisfies the relaxation metric may lengthen a measurement interval for periodical measurement of a downlink reference signal, etc., so as to reduce power consumption of the terminal device and improve battery life of the terminal device. Therefore, how to detect events triggered by a terminal device to determine whether the terminal equipment can implement the relaxation mechanism is very important.

BFD relaxation mechanism:
The principle of the BFD is as follows.

Beam-level communication links, due to easy to be blocked, result in poor communication quality or even failed communication. When a downlink beam fails, if the terminal device has a new candidate beam to replace the current failed beam, there is a chance to avoid a radio link failure (RLF) caused by the beam failure. A recovery process for the beam failure is as follows.

1) Beam failure detection (BFD): the detection object is a current service beam (a special cell (SpCell) and a secondary cell (SCell)) of the terminal device, the measurement content is a synchronization signal and physical broadcast channel (PBCH) block-reference signal (SSB-RS) or a channel-state information-reference signal (CSI-RS) of a corresponding service beam, measurement results in an evaluation period $T_{Evaluate\_BFD}$ are compared with a Qout_LR (block error rate (BLER)=10%) threshold, if all the measurement results are lower than the threshold, a beam failure instance indication will be triggered once.

2) Before beam failure detection timer configured times out, if a number of L1 (physical layer) beam failure instance indications reaches a configured threshold, i.e., beamFailureInstanceMaxCount, UE declares beam failure and starts candidate beam detection (CBD).

3) Candidate beam detection (CBD): the detection object is a candidate beam set configured by a network device for a terminal device, and the measurement content is the SSB-RS and/or CSI-RS of a corresponding candidate beam. The detection basis is the comparison of a measurement result in an evaluation period $T_{Evaluate\_CBD}$ with a configured threshold Qin_LR (L1-RSRP (reference signal receiving power)), a candidate beam having a measurement result greater than the threshold is used as a new available beam. The terminal device notifies the network device of the new available beam found, so that the network device knows that it can use the new beam for downlink transmission.

The relaxation mechanism for the BFD is introduced in R17. That is, for a terminal device that meets the relaxation metric, such as a terminal device that is in a static state and/or has a better channel state, the BFD relaxation mechanism will be performed. For example, it is possible to lengthen a time interval for the terminal device to periodically measure each corresponding service beam.

In view of the above problems, the present invention provides a measurement method and apparatus.

It can be understood that the communication system described in embodiments of the present invention serves to illustrate technical solutions according to embodiments of the present invention more clearly, and does not constitute a limitation on the technical solutions according to embodiments of the present invention. Those of ordinary skill in the art can understand that with the evolution of the system architecture and the emergence of new service scenarios, the technical solutions according to embodiments of the present invention are also applicable to similar technical problems.

The measurement method and apparatus provided by the present invention will be described in detail below with reference to the accompanying drawings.

Referring to FIG. 2, FIG. 2 is a schematic flowchart of a measurement method according to embodiments of the present invention. The measurement method may be performed by the terminal device in the communication system shown in FIG. 1.

As shown in FIG. 2, the measurement method may include but not limited to the following steps.

In step 201, a measured value of a target measurement is acquired. The target measurement includes a beam failure detection (BFD).

In embodiments of the present invention, the terminal device may perform the target measurement to obtain the measured value of the target measurement. The target measurement may include the beam failure detection (BFD).

Optionally, the measured value may be an SINR value of a downlink reference signal (such as SSB-RS, CSI-RS, etc.) and/or a signal strength of a reference signal of a serving cell, such as a reference signal receiving power (RSRP).

In embodiments of the present invention, the terminal device may also perform other measurements, such as an RRM measurement, an RLM measurement, and so on. As a possible implementation, the terminal device can also acquire measured values of other measurements.

In step 202, a target event to be triggered by the terminal device is determined according to the measured value and reference information corresponding to the target measurement. The target event includes a relaxation entry event or a relaxation exit event.

In embodiments of the present invention, the terminal device may determine the target event to be triggered by itself according to the measured value and the reference information corresponding to the target measurement. The target event includes the relaxation entry event or the relaxation exit event.

The reference information is reference information corresponding to the target measurement, which is a criterion of the measured value of the target measurement. The terminal device is able to determine whether its own state meets the requirement of the target event according to the measured value acquired and the reference information, and determine the target event to be triggered by itself.

It can be understood that the target event is a relaxation entry event, which means that the terminal device can enter the relaxation of the target measurement. As a possible implementation, the terminal device can lengthen the time interval for the periodic measurement of a reference signal. The target event is a relaxation exit event, which means that the terminal device exits the relaxation of the target measurement.

In the measurement method according to embodiments of the present invention, the measured value of the target measurement is acquired, the target measurement includes the beam failure detection (BFD), the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

Referring to FIG. 3, FIG. 3 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 3, the measurement method may include but not limited to the following steps.

In step 301, a target measurement is performed on a downlink reference signal of a serving cell of the terminal device to obtain a measured value. The target measurement is beam failure detection (BFD).

In embodiments of the present invention, the downlink reference signal may include a downlink reference signal of a primary serving cell and/or a downlink reference signal of at least one secondary serving cell.

In embodiments of the present invention, the terminal device is able to determine the range of serving cells for the target measurement, and the terminal device performs the target measurement on a downlink reference signal of a serving cell within the determined range to obtain a measured value.

In embodiments of the present invention, the downlink reference signal may be an SSB-RS and/or a CSI-RS. The downlink reference signal of the serving cell of the terminal device may be measured, and the measured value may be an SINR and/or an RSRP.

In step 302, a target event to be triggered by the terminal device is determined according to the measured value and reference information sent by a network device. The target event includes a relaxation entry event or a relaxation exit event.

In embodiments of the present invention, the reference information may be sent by the network device. For example, the network device may configure the reference information via an RRC message.

In embodiments of the present invention, the terminal device may determine the target event to be triggered by the terminal device according to the measured value and the reference information sent by the network device. The target event may include entering the relaxation entry event or the relaxation exit event.

In any embodiment of the present invention, the reference information sent by the network device may be applicable to the primary serving cell and/or the secondary serving cell.

In embodiments of the present invention, the terminal device is able to determine a serving cell to which the reference information is applicable, and determine the target event to be triggered by itself according to the measured value obtained by performing the target measurement in the serving cell to which the reference information is applicable and the reference information.

In some implementations, the terminal device is able to determine, according to the network device that sends the reference information, that the serving cell to which the reference information is applicable is a serving cell group corresponding to the network device. For example, the reference information is sent from a network device as a master node (MN) to the terminal device, and the terminal device determines that the serving cell to which the reference information is applicable is a master cell group (MCG); or the reference information is sent from a network device as a secondary node (SN) to the terminal device, and the terminal device determines that the serving cell to which the reference information is applicable is a secondary cell group (SCG). The master cell group includes a primary serving cell (as called primary cell, PCell) and at least one secondary serving cell (as called secondary cell, Scell); and the secondary cell group includes a primary serving cell (primary SCG cell, PSCell) and at least one secondary serving cell (Scell).

In some implementations, the terminal device is able to determine the serving cell to which the reference information is applicable according to a protocol. For example, the terminal device is able to determine according to a protocol that the reference information is applicable to the PCell, or the reference information is applicable to all SCells, or the reference information is applicable to all serving cells, etc. For another example, the terminal device may also determine according to a protocol that the reference information sent by the network device as the master node (MN) is applicable to all serving cells, or the reference information sent by the network device as the master node (MN) is applicable to the PCell.

In some embodiments, the terminal device is able to receive a notification sent by the network device, the notification indicates a serving cell in which the terminal device is to perform the target measurement, and the terminal device determines that the serving cell to which the reference information is applicable is the serving cell indicated by the notification, in which serving cell the target measurement is to be performed. The terminal device is able to perform the target measurement in the serving cell indicated by the notification according to the received notification, and determine the target event to be triggered by itself according to the measured value obtained from the measurement and the reference information. For example, the terminal device is able to receive the notification sent by the network device in advance, and the notification may indicate that the serving cell in which the terminal device is to perform the target measurement is the PCell, or the notification may indicate a list of serving cells in which the terminal device is to perform the target measurement, such as a SCell list.

In some implementations, the terminal device is able to determine the serving cell to which the reference information is applicable according to indication information carried in the reference information. The indication indicates the serving cell to which the reference information is applicable.

Optionally, the indication information may be a serving cell identifier, and the terminal device is able to determine, according to the serving cell identifier, that the serving cell to which the reference information is applicable is the serving cell indicated by the serving cell identifier. For example, the serving cell identifier may indicate a PCell, an SCell, a PSCell, an SpCell, or all cells, and so on. It should be noted that the special cell SpCell includes the PCell and the PSCell.

Optionally, the indication information may be a list of serving cells, and the terminal device is able to determine that serving cells to which the reference information is applicable are serving cells in the list of serving cells.

In embodiments of the present invention, there may be one or more sets of reference information. That is, the network device may configure at least one set of reference information to the terminal device.

As an example, the network device may send a set of reference information to the terminal device, and serving cells to which the unique set of reference information is applicable to may be determined by any of the above-mentioned implementations.

As another example, the network device may send a plurality of sets of reference information to the terminal device, and different sets of reference information are applicable to different serving cells. For each set of reference information, its applicable serving cells may also be determined by any of the above implementations. For example, the network device may respectively configure the reference information for a master cell group (MCG) and a secondary cell group (SCG) to which the terminal device is connected.

In the measurement method according to embodiments of the present invention, the target measurement is performed on the downlink reference signal of the serving cell of the terminal device to obtain the measured value, the target measurement is the beam failure detection (BFD), the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

Referring to FIG. 4, FIG. 4 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 4, the measurement method may include but not limited to the following steps.

In step 401, a measured value of a target measurement is acquired.

The target measurement includes a beam failure detection (BFD), and the measured value includes at least one first RSRP obtained by measuring a downlink reference signal at least one time in a target period indicated in reference information corresponding to the target measurement, or includes at least one first RSRP obtained by measuring at least one downlink reference signal in the target period.

In embodiments of the present invention, the reference information configured by the network device may include the target period, and the terminal device may measure the downlink reference signal at least one time within the target period to obtain at least one measured value, which is recorded as at least one first RSRP in the present invention.

As an example, the terminal device may measure the downlink reference signal one time within the target period to obtain a first RSRP.

As another example, the terminal device may measure the downlink reference signal a plurality of times within the target period to obtain a plurality of first RSRPs.

In embodiments of the present invention, the terminal device may also measure at least one downlink reference signal within the target period to obtain at least one first RSRP.

As an example, the terminal device may measure a downlink reference signal at least one time within the target period to obtain at least one first RSRP.

As another example, the terminal device may measure a plurality of downlink reference signals at least one time within the target period to obtain a plurality of first RSRPs.

In step 402, a first difference between each of the at least one first RSRP and a corresponding reference value is determined. The reference value corresponding to the first RSRP is measured by the terminal device before measuring the first RSRP.

In embodiments of the present invention, each first RSPR has a corresponding reference value, and the reference value and the first RSPR have a one-to-one correspondence. The reference value corresponding to the first RSRP may be an RSRP measured by the terminal device before measuring the first RSRP. For example, the reference value corresponding to the first RSRP may be an RSRP lastly measured by the terminal device before measuring the first RSRP.

In embodiments of the present invention, for any first RSRP, an RSRP measured by the terminal device before measuring the first RSRP may be obtained, which is recorded as a reference value in the present invention.

In embodiments of the present invention, for each first RSRP, a difference between the first RSRP and the corresponding reference value may be determined, which is recorded as the first difference in the present invention. For example, a difference obtained by subtracting the reference value from the corresponding first RSRP may be taken as the first difference, or a difference obtained by subtracting the first RSRP from the corresponding reference value may be taken as the first difference.

In step 403, in response to the first difference corresponding to each of the at least one first RSRP being less than a first difference threshold in the reference information, it is determined that the target event to be triggered by the terminal device is the relaxation entry event.

In embodiments of the present invention, the reference information configured by the network device may also include a first difference threshold, which is used to represent a movement speed of the terminal device, that is, to determine whether the terminal device is in a static state or a low movement state.

For example, the network device may configure the target period and the first difference threshold via an RRC message. Optionally, the target period may be marked as $T_{SearchDeltaP}$, and the first difference threshold may be marked as $S_{SearchDeltaP}$.

In embodiments of the present invention, in a case where the first differences corresponding to all the first RSRPs are less than the first difference threshold in the reference information, it may be determined that the target event to be triggered by the terminal device is the relaxation entry event, that is, it is determined that the terminal device satisfies the relaxation metric.

It should be noted that, in the case where the first differences corresponding to all the first RSRPs are less than the first difference threshold, it means that the movement speed of the terminal device is low. At this time, the relaxation entry event may also be called a low movability event, and correspondingly, a relaxation entry metric may also be referred to a low movability metric.

In any embodiment of the present invention, the reference value corresponding to each first RSRP may also be updated. For example, when the terminal device performs cell handover, the reference values may be updated according to the respective first RSRPs. For example, for each first RSRP, the reference value corresponding to the first RSRP may be updated to the first RSRP. Alternatively, for each first RSRP, it may be determined whether the difference obtained by subtracting the corresponding reference value from the first RSRP is greater than a third difference threshold, if the difference obtained by subtracting the corresponding reference value from the first RSRP is greater than the third difference threshold, the reference value corresponding to the first RSRP may be updated according to the first RSRP, for example, the reference value corresponding to the first RSRP is updated to the first RSRP. If the difference obtained by subtracting the corresponding reference value from the first RSRP is not greater than the third difference threshold, the reference value corresponding to the first RSRP does not need to be updated. Alternatively, it may be determined within the target period ($T_{SearchDeltaP}$) whether the first difference corresponding to each first RSRP is less than the first difference threshold. If the first difference corresponding to a certain first RSRP is not less than the first difference threshold, the corresponding reference value may be updated according to the first RSRP, for example, the reference value corresponding to the first RSRP may be updated to the first RSRP. If the first difference corresponding to a certain first RSRP is less than the first difference threshold, the reference value corresponding to the first RSRP does not need to be updated.

The third difference threshold is preset. For example, the third difference threshold may be configured by the network device, or the third difference threshold may be specified by a protocol, which is not limited in the present invention. For example, the third difference threshold may be 0.

In embodiments of the present invention, the serving cell to which the reference information is applicable is the primary serving cell (PCell and/or PSCell), that is, the steps 401-403 can be performed only in the primary serving cell (PCell and/or PSCell).

In the measurement method according to embodiments of the present invention, the measured value of the target measurement is acquired, and the target measurement includes the beam failure detection (BFD); the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

In any embodiment of the present invention, an event, Event R1 (including the relaxation entry event and the relaxation exit event), may be defined through a protocol.

As an example, the relaxation entry event, such as the low movability event, may be marked as Event R1-1, and the Event R1-1 may be determined by the low movability metric. That is, within the target period $T_{SearchDeltaP}$, if a difference between a measured value Srxlev detected by the terminal device and a reference value $Srxlev_{Ref}$ is less than the first difference threshold $S_{SearchDeltaP}$, it indicates that the reference signal does not change much. At this time, it may be considered that the terminal device is in a low movement state.

Embodiment 1: when the low movability metric: $(Srxlev_{Ref} - Srxlev) < S_{SearchDeltaP}$ is met, it may be determined that the target event to be triggered by the terminal device is the relaxation entry event or the low movability event.

The unit of the measured value Srxlev is dB, and the unit of the reference value $Srxlev_{Ref}$ is dB.

When any of the following conditions is met, the measured value is set as the reference value:

(1) the terminal device is handed over to a new serving cell;
(2)

$$Srxlev - Srxlev_{Ref} > 0;$$

(3) within the target period $T_{SearchDeltaP}$, the low movability metric: $(Srxlev_{Ref} - Srxlev) < S_{SearchDeltaP}$ is not met.

It should be noted that the serving cell to which the low movability metric is applicable is the primary serving cell (PCell and/or PSCell).

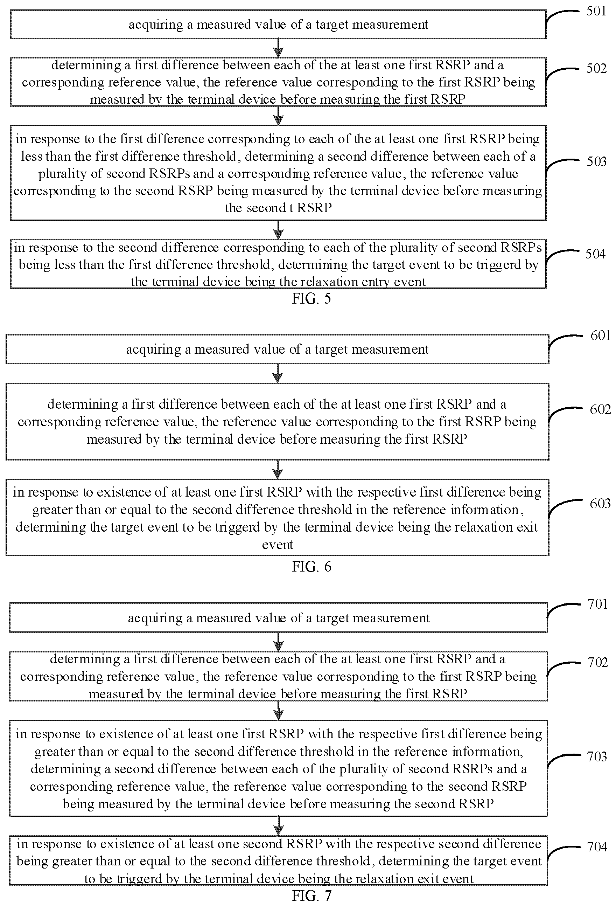

Referring to FIG. 5, FIG. 5 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 5, the measurement method may include but not limited to the following steps.

In step 501, a measured value of a target measurement is acquired.

The target measurement includes a beam failure detection (BFD), and the measured value includes at least one first RSRP obtained by measuring a downlink reference signal at least one time within a target period $(T_{SearchDeltaP})$ indicated in reference information corresponding to the target measurement, or includes at least one first RSRP obtained by measuring at least one downlink reference signal within the target period $(T_{SearchDeltaP})$. In addition, the measured value also includes a plurality of second RSRPs obtained by measuring the downlink reference signal a plurality of times within a set duration (T1) after the target period, or includes a plurality of second RSRPs obtained by measuring a plurality of downlink reference signals within the set duration (T1).

In embodiments of the present invention, the step 501 may be performed in any manner as described in embodiments of the present invention, which is not limited in embodiments of the present invention, and will not be repeated here.

In embodiments of the present invention, the set duration is preset. For example, the set duration may be configured by a network device, or the set duration may also be specified by a protocol, which is not limited in the present invention. Optionally, the set duration is marked as T1.

In embodiments of the present invention, the terminal device may also measure the downlink reference signal a plurality of times within the set duration (T1) after the target period $(T_{SearchDeltaP})$ to obtain a plurality of measured values, which are recorded as a plurality of second RSRP. Alternatively, the terminal device may measure a plurality of downlink reference signals at least one time within the set duration (T1) to obtain a plurality of second RSRPs.

In step 502, a first difference between each of the at least one first RSRP and a corresponding reference value is determined. The reference value corresponding to the first RSRP is measured by the terminal device before measuring the first RSRP.

In embodiments of the present invention, the step 502 may be performed in any manner as described in embodiments of the present invention, which is not limited in embodiments of the present invention, and will not be repeated here.

In step 503, in response to the first difference corresponding to each of the at least one first RSRP being less than the first difference threshold in the reference information, a second difference between each of the plurality of second RSRPs and a corresponding reference value is determined. The second RSRP and the corresponding reference value are measured by the terminal device before measuring the second RSRP.

In embodiments of the present invention, each second RSPR has a corresponding reference value, and the reference value and the second RSPR have a one-to-one correspondence. The reference value corresponding to the second RSRP may be an RSRP measured by the terminal device before measuring the second RSRP. For example, the reference value corresponding to the second RSRP may be an RSRP lastly measured by the terminal device before measuring the second RSRP.

In embodiments of the present invention, in a case where the terminal device determines that the first differences corresponding to all the first RSRPs are less than the first difference threshold in the reference information, the terminal device may further acquire the reference value corresponding to each second RSRP.

In embodiments of the present invention, for each second RSRP, the terminal device may determine a difference between the second RSRP and the corresponding reference value, which is recorded as the second difference in the present invention. For example, a difference obtained by subtracting the corresponding reference value from the second RSRP may be taken as the second difference, or a difference obtained by subtracting the corresponding second RSRP from the reference value may be taken as the second difference.

In step 504, in response to the second difference corresponding to each of the plurality of second RSRPs is less than the first difference threshold, it is determined that the target event to be triggered by the terminal device is the relaxation entry event.

In embodiments of the present invention, in the case where the second difference corresponding to each second RSRP is less than the first difference threshold, it may be determined that the target event is the relaxation entry event, that is, it is determined that the terminal device satisfies the relaxation entry metric.

It should be noted that, in a case where the second differences corresponding to all the second RSRPs are less than the first difference threshold, it indicates that the movement speed of the terminal device is low, and at this time, the relaxation entry event may also be called a low movability event.

In any embodiment of the present invention, the reference value corresponding to each first RSRP may also be updated. For example, when the terminal device performs cell handover, the reference values may be updated according to the respective first RSRPs. For example, for each first RSRP, the reference value corresponding to the first RSRP may be updated to the first RSRP. Alternatively, for each first RSRP, it may be determined whether a difference obtained by subtracting the corresponding reference value from the first RSRP is greater than a third difference threshold, if the difference obtained by subtracting the corresponding reference value from the first RSRP is greater than the third difference threshold, the reference value corresponding to the first RSRP may be updated according to the first RSRP, for example, the reference value corresponding to the first RSRP is updated to the first RSRP. If the difference obtained by subtracting the corresponding reference value from the first RSRP is not greater than the third difference threshold, the reference value corresponding to the first RSRP does not need to be updated. Alternatively, it may be determined within the target period ($T_{SearchDeltaP}$) whether the first difference corresponding to each first RSRP is less than the first difference threshold. If the first difference corresponding to a certain first RSRP is not less than the first difference threshold, the corresponding reference value may be updated according to the first RSRP, for example, the reference value corresponding to the first RSRP may be updated to the first RSRP. If the first difference corresponding to a certain first RSRP is less than the first difference threshold, the reference value corresponding to the first RSRP does not need to be updated.

Similarly, when the terminal device performs cell handover, the reference values may be updated according to the respective second RSRPs. For example, for each second RSRP, the reference value corresponding to the second RSRP may be updated to the second RSRP. Alternatively, for each second RSRP, it may be determined whether a difference obtained by subtracting the corresponding reference value from the second RSRP is greater than a third difference threshold, if the difference obtained by subtracting the corresponding reference value from the second RSRP is greater than the third difference threshold, the corresponding reference value may be updated according to the second RSRP, for example, the reference value corresponding to the second RSRP is updated to the second RSRP. If the difference obtained by subtracting the corresponding reference value from the second RSRP is not greater than the third difference threshold, the reference value corresponding to the second RSRP does not need to be updated. Alternatively, it may be determined within a set duration ($T1$) whether the second difference corresponding to each second RSRP is less than the first difference threshold. If the second difference corresponding to a certain second RSRP is not less than the first difference threshold, the corresponding reference value may be updated according to the second RSRP, for example, the reference value corresponding to the second RSRP may be updated to the second RSRP. If the second difference corresponding to a certain second RSRP is less than the first difference threshold, the reference value corresponding to the second RSRP does not need to be updated.

In embodiments of the present invention, the serving cell to which the reference information is applicable is the primary serving cell (PCell and/or PSCell), that is, the steps 501-504 can be performed only in the primary serving cell (PCell and/or PSCell).

In the measurement method according to embodiments of the present invention, the measured value of the target measurement is acquired, and the target measurement includes the beam failure detection (BFD); the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

In any embodiment of the present invention, an event, Event R1 (including the relaxation entry event and the relaxation exit event), may be defined through a protocol.

As an example, the relaxation entry event, such as the low movability event, may be marked as Event R1-1, and the Event R1-1 may be determined by the low movability metric. That is, within the target period $T_{SearchDeltaP}$, if a difference between a measured value Srxlev detected by the terminal device and a reference value $Srxlev_{Ref}$ is less than the first difference threshold $S_{SearchDeltaP}$, it indicates that the reference signal does not change much. At this time, it may be considered that the terminal device is in a low movement state.

Further, it may be further determined within the set duration T1 whether a difference between the measured value Srxlev detected by the terminal device and a reference value $Srxlev_{Ref}$ is less than the first difference threshold $S_{SearchDeltaP}$, and if the difference is less than the first difference threshold $S_{SearchDeltaP}$, it is determined that the target event to be triggered by the terminal device is the relaxation entry event or the low movability event.

Embodiment 2: the judgment condition for the Event R1-1 is: within the set duration, with $T_{SearchDeltaP}$ as the unit, when the low movability metric: ($Srxlev_{Ref}$ - Srxlev) < $S_{SearchDeltaP}$ is met, it is determined that the target event to be triggered by the terminal device is the relaxation entry event or the low movability event.

The unit of the measured value Srxlev is dB, and the unit of the reference value $Srxlev_{Ref}$ is dB.

When any of the following conditions is met, the measured value is set as the reference value:

(1) the terminal device is handed over to a new serving cell;

(2)

$$Srxlev - Srxlev_{Ref} > 0;$$

(3) within the target period $T_{SearchDeltaP}$, the low movability metric: ($Srxlev_{Ref}$ - Srxlev) < $S_{SearchDeltaP}$ is not met.

It should be noted that the serving cell to which the low movability metric is applicable is the primary serving cell (PCell and/or PSCell).

Referring to FIG. 6, FIG. 6 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 6, the measurement method may include but not limited to the following steps.

In step 601, a measured value of a target measurement is acquired.

The target measurement includes a beam failure detection (BFD), and the measured value includes at least one first RSRP obtained by measuring a downlink reference signal at least one time within the target period indicated in the reference information corresponding to the target measurement, or includes at least one first RSRP obtained by measuring at least one downlink reference signal within the target period.

In step 602, a first difference between each of the at least one first RSRP and a corresponding reference value is determined. The reference value corresponding to the first RSRP is measured by the terminal device before measuring the first RSRP.

In embodiments of the present invention, the steps 601 to 602 may be respectively performed in any manner as described in embodiments of the present invention, which are not limited in embodiments of the present invention, and will not be repeated here.

In step 603, in response to existence of at least one first RSRP with the respective first difference being greater than or equal to a second difference threshold in the reference information, it is determined that the target event to be triggered by the terminal device is the relaxation exit event.

In embodiments of the present invention, besides the target period ($T_{SearchDeltaP}$), the reference information sent by the network device may also include the second difference threshold, which is used to represent the movement speed of the terminal device, that is, to determine whether the terminal device is in a static state or a low movement state.

The second difference threshold may be the same as or different from the first difference threshold. For example, the second difference threshold may be determined according to the first difference threshold and a compensation offset value.

As an example, the network device may configure the target period and the second difference threshold via an RRC message. Optionally, the target period may be marked as $T_{SearchDeltaP}$, and the second difference threshold may be marked as $S_{SearchDeltaP}$'.

In embodiments of the present invention, if there exists at least one first RSRP with the respective first difference being greater than or equal to the second difference threshold in the reference information, it may be determined that the target event to be triggered by the terminal device is the relaxation exit event, that is, it is determined that the terminal device meets a relaxation exit criteria.

It should be noted that, if there exists at least one first RSRP with the respective first difference not less than the second difference threshold, it indicates that the movement speed of the terminal device is not low. At this time, the relaxation exit event may also be called a non-low movability event or a high movability event.

In any embodiment of the present invention, the reference value corresponding to each first RSRP may also be updated. For example, when the terminal device performs cell handover, the reference values may be updated according to the respective first RSRPs. For example, for each first RSRP, the reference value corresponding to the first RSRP may be updated to the first RSRP. Alternatively, for each first RSRP, it may be determined whether a difference obtained by subtracting the corresponding reference value from the first RSRP is greater than a third difference threshold, if the difference obtained by subtracting the corresponding reference value from the first RSRP is greater than the third difference threshold, the reference value corresponding to the first RSRP may be updated according to the first RSRP, for example, the reference value corresponding to the first RSRP is updated to the first RSRP. If the difference obtained by subtracting the corresponding reference value from the first RSRP is not greater than the third difference threshold, the reference value corresponding to the first RSRP does not need to be updated. Alternatively, it may be determined within the target period ($T_{SearchDeltaP}$) whether the first difference corresponding to each first RSRP is less than the second difference threshold. If the first difference corresponding to a certain first RSRP is less than the second difference threshold, the corresponding reference value may be updated according to the first RSRP, for example, the reference value corresponding to the first RSRP may be updated to the first RSRP. If the first difference corresponding to a certain first RSRP is not less than the second difference threshold, the reference value corresponding to the first RSRP does not need to be updated.

In embodiments of the present invention, the serving cell to which the reference information is applicable is the primary serving cell (PCell and/or PSCell), that is, the steps 601-603 can be performed only in the primary serving cell (PCell and/or PSCell).

In the measurement method according to embodiments of the present invention, the measured value of the target measurement is acquired, and the target measurement includes the beam failure detection (BFD); the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

In any embodiment of the present invention, an event, Event R1 (including the relaxation entry event and the relaxation exit event), may be defined through a protocol.

As an example, the relaxation exit event, such as the non-low movability event or the high movability event, may be marked as Event R1-2, and the Event R1-2 may be determined by the low movability metric. That is, within the target period $T_{SearchDeltaP}$, if a difference between a measured value Srxlev detected by the terminal device and a reference value $Srxlev_{Ref}$ is greater than the second difference threshold $S_{SearchDeltaP}$', it indicates that the reference signal changes greatly. At this time, it may be considered that the terminal device is not in a low movement state.

Embodiment 3: when ($Srxlev_{Ref}$ - Srxlev) > $S_{SearchDeltaP}$' is met, it may be determined that the target event to be triggered by the terminal device is the relaxation exit event, the non-low movability event or the high movability event.

The unit of the measured value Srxlev is dB, and the unit of the reference value $Srxlev_{Ref}$ is dB.

When any of the following conditions is met, the measured value is set as the reference value:

(1) the terminal device is handed over to a new serving cell;
(2)

$$Srxlev - Srxlev_{Ref} > 0;$$

(3) within the target period $T_{SearchDeltaP}$, the low movability metric: $(Srxlev_{Ref} - Srxlev) > S_{SearchDeltaP}$, is not met.

It should be noted that the serving cell to which the low movability metric is applicable is the primary serving cell (PCell and/or PSCell).

Referring to FIG. 7, FIG. 7 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 7, the measurement method may include but not limited to the following steps.

In step 701, a measured value of a target measurement is acquired.

The target measurement includes a beam failure detection (BFD), and the measured value includes at least one first RSRP obtained by measuring a downlink reference signal at least one time within a target period indicated in reference information corresponding to the target measurement, or includes at least one first RSRP obtained by measuring at least one downlink reference signal within the target period. In addition, the measured value also includes a plurality of second RSRPs obtained by measuring the downlink reference signal a plurality of times within a set duration after the target period, or includes a plurality of second RSRPs obtained by measuring a plurality of downlink reference signals within the set duration.

In step 702, a first difference between each of the at least one first RSRP and a corresponding reference value is determined. The reference value corresponding to the first RSRP is measured by the terminal device before measuring the first RSRP.

In embodiments of the present invention, the steps 701-702 may be respectively performed in any manner as described in embodiments of the present invention, which are not limited in embodiments of the present invention, and will not be repeated here.

In step 703, in response to existence of at least one first RSRP with the respective first difference being greater than or equal to the second difference threshold in the reference information, a second difference between each of the plurality of second RSRPs and a corresponding reference value is determined. The reference value corresponding to the second RSRP is measured by the terminal device before measuring the second RSRP.

For the explanations and illustrations of the reference value corresponding to the second RSRP, reference may be made to any embodiment of the present invention, and details are not repeated here.

In embodiments of the present invention, in a case where there exists at least one first RSRP with the respective first difference being greater than or equal to the second difference threshold in the reference information, the reference value corresponding to each second RSRP may be further acquired, and the second difference between each second RSRP and the corresponding reference value is determined.

In step 704, in response to existence of at least one second RSRP with the respective second difference being greater than or equal to the second difference threshold, it is determined that the target event to be triggered by the terminal device is the relaxation exit event.

In embodiments of the present invention, if there exists at least one second RSRP with the respective second difference being greater than or equal to the second difference threshold in the reference information, it may be determined that the target event to be triggered by the terminal device is the relaxation exit event, that is, it is determined that the terminal device meets the relaxation exit criteria.

It should be noted that, if there exists at least one second RSRP with the respective second difference not less than the second difference threshold, it indicates that the movement speed of the terminal device is not low. At this time, the relaxation exit event may also be called a non-low movability event or a high movability event.

In any embodiment of the present invention, the reference value corresponding to each first RSRP may also be updated. For example, when the terminal device performs cell handover, the reference values may be updated according to the respective first RSRPs. For example, for each first RSRP, the reference value corresponding to the first RSRP may be updated to the first RSRP. Alternatively, for each first RSRP, it may be determined whether a difference obtained by subtracting the corresponding reference value from the first RSRP is greater than a third difference threshold, if the difference obtained by subtracting the corresponding reference value from the first RSRP is greater than the third difference threshold, the reference value corresponding to the first RSRP may be updated according to the first RSRP, for example, the reference value corresponding to the first RSRP is updated to the first RSRP. If the difference obtained by subtracting the corresponding reference value from the first RSRP is not greater than the third difference threshold, the reference value corresponding to the first RSRP does not need to be updated. Alternatively, it may be determined within the target period ($T_{SearchDeltaP}$) whether the first difference corresponding to each first RSRP is less than the second difference threshold. If the first difference corresponding to a certain first RSRP is less than the second difference threshold, the corresponding reference value may be updated according to the first RSRP, for example, the reference value corresponding to the first RSRP may be updated to the first RSRP. If the first difference corresponding to a certain first RSRP is not less than the first difference threshold, the reference value corresponding to the first RSRP does not need to be updated.

Similarly, when the terminal device performs cell handover, the reference values may be updated according to the respective second RSRPs. For example, for each second RSRP, the reference value corresponding to the second RSRP may be updated to the second RSRP. Alternatively, for each second RSRP, it may be determined whether a difference obtained by subtracting the corresponding reference value from the second RSRP is greater than a third difference threshold, if the difference obtained by subtracting the corresponding reference value from the second RSRP is greater than the third difference threshold, the corresponding reference value may be updated according to the second RSRP, for example, the reference value corresponding to the second RSRP is updated to the second RSRP. If the difference obtained by subtracting the corresponding reference value from the second RSRP is not greater than the third difference threshold, the reference value corresponding to the second RSRP does not need to be updated. Alternatively, it may be determined within a set duration (T1) whether the second difference corresponding to each second RSRP is less than the second difference threshold. If the second difference corresponding to a certain second RSRP is less than the second difference threshold, the corresponding reference value may be updated according to the second RSRP, for example, the reference value corresponding to the second RSRP may be updated to the second RSRP. If the second difference corresponding to a certain second RSRP is not less than the second difference threshold, the reference value corresponding to the second RSRP does not need to be updated.

In embodiments of the present invention, the serving cell to which the reference information is applicable is the primary serving cell (PCell and/or PSCell), that is, the steps 701-704 can be performed only in the primary serving cell (PCell and/or PSCell).

In the measurement method according to embodiments of the present invention, the measured value of the target measurement is acquired, and the target measurement includes the beam failure detection (BFD); the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

In any embodiment of the present invention, an event, Event R1 (including the relaxation entry event and the relaxation exit event), may be defined through a protocol.

As an example, the relaxation exit event, such as the non-low movability event or the high movability event, may be marked as Event R1-2, and the Event R1-2 may be determined by the low movability metric. That is, within the target period $T_{SearchDeltaP}$, if a difference between a measured value Srxlev detected by the terminal device and a reference value $Srxlev_{Ref}$ is greater than the second difference threshold $S_{SearchDeltaP}$', it indicates that the reference signal changes greatly. At this time, it may be considered that the terminal device is not in a low movement state.

Further, it may be further determined within the set duration T1 whether a difference between the measured value Srxlev detected by the terminal device and the reference value $Srxlev_{Ref}$ is greater than the second difference threshold $S_{SearchDeltaP}$', and if the difference is greater than the second difference threshold $S_{SearchDeltaP}$', it is determined that the target event to be triggered by the terminal device is the relaxation exit event or the non-low movability event.

Embodiment 4: the judgment condition for the Event R1-2 is: within the set duration, with $T_{SearchDeltaP}$ as the unit, when $(Srxlev_{Ref} - Srxlev) > S_{SearchDeltaP}$' is met, it may be determined that the target event to be triggered by the terminal device is the relaxation exit event or the non-low movability event.

The unit of the measured value Srxlev is dB, and the unit of the reference value $Srxlev_{Ref}$ is dB.

When any of the following conditions is met, the measured value is set as the reference value:

(1) the terminal device is handed over to a new serving cell;
(2)

$$Srxlev - Srxlev_{Ref} > 0;$$

(3) within the target period $T_{SearchDeltaP}$, the low movability metric: $(Srxlev_{Ref} - Srxlev) > S_{SearchDeltaP}$' is not met.

It should be noted that the serving cell to which the low movability metric is applicable is the primary serving cell (PCell and/or PSCell).

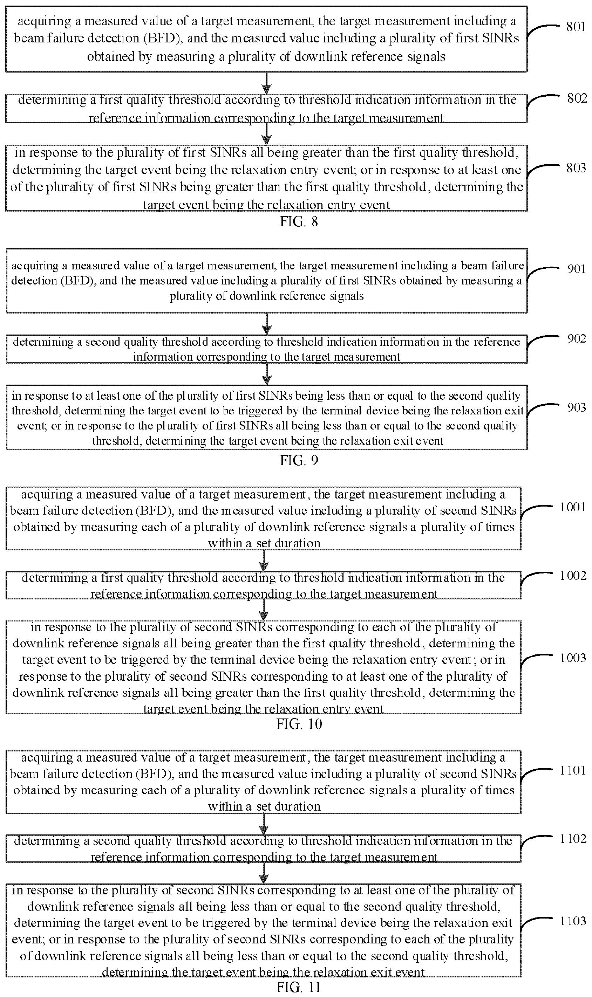

Referring to FIG. 8, FIG. 8 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 8, the measurement method may include but not limited to the following steps.

In step 801, a measured value of a target measurement is acquired. The target measurement includes a beam failure detection (BFD), and the measured value includes a plurality of first SINRs obtained by measuring a plurality of downlink reference signals.

In embodiments of the present invention, the step 801 may be performed in any manner as described in embodiments of the present invention, which is not limited in embodiments of the present invention, and will not be repeated here.

In embodiments of the present invention, the terminal device may measure a plurality of downlink reference signals at least one time to obtain a plurality of measured values, which are recorded as a plurality of first SINRs in the present invention.

In step 802, a first quality threshold is determined according to threshold indication information in reference information corresponding to the target measurement.

In embodiments of the present invention, the reference information sent by the network device may include the threshold indication information, for example, the network device may configure the threshold indication information via an RRC message.

In embodiments of the present invention, the terminal device may determine the first quality threshold according to the threshold indication information, and the first quality threshold is used to represent a reference signal quality.

In a possible implementation of embodiments of the present invention, the threshold indication information may include a first offset, and optionally, the first offset is marked as offset 1.

In embodiments of the present invention, the terminal device may determine the first quality threshold according to the first offset. For example, the first quality threshold may be obtained by adding the first offset with a first configuration threshold. The first configuration threshold may be a threshold $Q_{in\_}LR$ or $Q_{out\_}LR$ corresponding to the BFD in the related art.

In another possible implementation of embodiments of the present invention, the threshold indication information may include a target threshold. The terminal device may determine the first quality threshold according to the target threshold, for example, the target threshold may be used as the first quality threshold.

In step 803, in response to the plurality of first SINRs all being greater than the first quality threshold, it is determined that the target event is the relaxation entry event; or in response to at least one of the plurality of first SINRs being greater than the first quality threshold, it is determined that the target event is the relaxation entry event.

In a possible implementation of embodiments of the present invention, in a case where the plurality of first SINRs all are greater than the first quality threshold, it may be determined that the target event to be triggered by the terminal device is the relaxation entry event, that is, it is determined that the terminal device meets the relaxation entry metric.

In another possible implementation of embodiments of the present invention, if there exists at least one first SINR which is greater than the first quality threshold, it may be determined that the target event to be triggered by the terminal device is the relaxation entry event, that is, it is determined that the terminal device meets the relaxation entry metric.

It should be noted that, when the first SINR is greater than the first quality threshold, it can be determined that the signal quality of the reference signal is better, and at this time, the relaxation entry event may also be called a good cell signal quality event.

In embodiments of the present invention, it may be determined in any serving cell that the signal quality of the reference signal is better, and the serving cell to which the reference information is applicable may be determined in any manner as described in various embodiments of the present invention.

In the measurement method according to embodiments of the present invention, the measured value of the target measurement is acquired, and the target measurement includes the beam failure detection (BFD); the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

In any embodiment of the present invention, an event, Event R2 (including the relaxation entry event and the relaxation exit event), may be defined through a protocol.

As an example, the relaxation entry event, such as a good cell signal quality event, may be marked as Event R2-1, and the Event R2-1 may be determined by a good signal quality metric. That is, when a plurality of reference signals (RSs) are configured in a serving cell, each RS may be measured, and the measured SINR corresponding to the RS may be compared with a threshold to determine whether the terminal device meets the good signal quality metric.

Embodiment 5: when all RSs meet: measured value $SINR_{measured}$ > first quality threshold ($Q_{out}$ + Offset 1), it is determined that the terminal device meets the good signal quality metric, and it is determined that the target event to be triggered by the terminal device is the relaxation entry event or the good cell signal quality event.

Embodiment 6: when any RS meets: measured value $SINR_{measured}$ > first quality threshold ($Q_{out}$ + Offset 1), it is determined that the terminal device meets the good signal quality metric, and it is determined that the target event to be triggered by the terminal device is the relaxation entry event or the good cell signal quality event.

It should be noted that, in embodiments of the present invention, the serving cell to which the good signal quality metric is applicable is any serving cell, that is, any serving cell can apply the good signal quality metric, and specifically, the serving cell to which the good signal quality metric is applicable may be determined in any manner as described in embodiments of the present invention.

Referring to FIG. 9, FIG. 9 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 9, the measurement method may include but not limited to the following steps.

In step 901, a measured value of a target measurement is acquired. The target measurement includes a beam failure detection (BFD), and the measured value includes a plurality of first SINRs obtained by measuring a plurality of downlink reference signals.

In embodiments of the present invention, the step 901 may be performed in any manner as described in embodiments of the present invention, which is not limited in embodiments of the present invention, and will not be repeated here.

In step 902, a second quality threshold is determined according to threshold indication information in reference information corresponding to the target measurement.

In embodiments of the present invention, the reference information sent by the network device may include the threshold indication information, for example, the network device may configure the threshold indication information via an RRC message.

In embodiments of the present invention, the terminal device may determine the second quality threshold according to the threshold indication information, and the second quality threshold is used to represent a reference signal quality.

In a possible implementation of embodiments of the present invention, the threshold indication information may include a second offset, and optionally, the second offset is marked as offset2. The terminal device may determine the second quality threshold according to the second offset, for example, the second quality threshold may be obtained by adding the second offset with a second configuration threshold.

The second configuration threshold may be a threshold $Q_{in\_}$LR or $Q_{out\_}$LR corresponding to the BFD in the related art.

The second offset may be the same as or different from the first offset, which is not limited in the present invention.

The first configuration threshold may be the same as or different from the second configuration threshold, which is not limited in the present invention.

It should be noted that the first offset configured by the network device for determining whether to trigger the relaxation entry event may be different from the second offset for determining whether to trigger the relaxation exit event. At this time, even if the first configured threshold is the same as the second configuration threshold, the first quality threshold is different from the second quality threshold.

In another possible implementation of embodiments of the present invention, the threshold indication information may include a target threshold. The terminal device may determine the second quality threshold according to the target threshold, for example, the target threshold may be used as the second quality threshold.

In step 903, in response to at least one of the plurality of first SINRs being less than or equal to the second quality threshold, it is determined that the target event to be triggered by the terminal device is the relaxation exit event; or in response to the plurality of first SINRs all being less than or equal to the second quality threshold, it is determined that the target event is the relaxation exit event.

In embodiments of the present invention, if there exists at least one first SINR which is less than or equal to the second quality threshold, it may be determined that the target event to be triggered by the terminal device is the relaxation exit event, that is, it is determined that the terminal device meets the relaxation exit criteria. Alternatively, in the case where each first SINR is less than or equal to the second quality threshold, it may be determined that the target event to be triggered by the terminal device is the relaxation exit event, that is, it is determined that the terminal device meets the relaxation exit criteria.

It should be noted that, when the first SINR is less than or equal to the second quality threshold, it may be determined that the signal quality of the reference signal is poor. At this time, the relaxation exit event may also be called a non-good cell signal quality event or a bad cell signal quality event.

In embodiments of the present invention, it may be determined in any serving cell that the signal quality of the reference signal is poor, and the serving cell to which the reference information is applicable may be determined in any manner as described in various embodiments of the present invention.

In the measurement method according to embodiments of the present invention, the measured value of the target measurement is acquired, and the target measurement includes the beam failure detection (BFD); the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

In any embodiment of the present invention, an event, Event R2 (including the relaxation entry event and the relaxation exit event) may be defined through a protocol.

As an example, the relaxation exit event, such as the non-good cell signal quality event or the bad cell signal quality event, may be marked as Event R2-2, and the Event R2-2 may be determined by a good signal quality metric. That is, when a plurality of reference signals (RSs) are configured in a serving cell, each RS may be measured, and the measured SINR corresponding to the RS may be compared with a threshold to determine whether the terminal device meets the good signal quality metric.

Embodiment 7: when any RS meets: measured value $SINR_{measured}$ < second quality threshold ($Q_{out}$ + Offset2), it is determined that the terminal device does not meet the good signal quality metric, and it is determined that the target event to be triggered by the terminal device is the relaxation exit event, the non-good cell signal quality event or the bad cell signal quality event.

Embodiment 8: when all RSs meet: measured value $SINR_{measured}$ < second quality threshold ($Q_{out}$ + Offset2), it is determined that the terminal device does not meet the good signal quality metric, and it is determined that the target event to be triggered by the terminal device is relaxation exit event, the non-good cell signal quality event or the bad cell signal quality event.

It should be noted that, in embodiments of the present invention, the serving cell to which the good signal quality metric is applicable is any serving cell, that is, any serving cell can apply the good signal quality metric, and specifically, the serving cell to which the reference information is applicable may be determined in any manner as described in embodiments of the present invention.

Referring to FIG. 10, FIG. 10 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 10, the measurement method may include but not limited to the following steps.

In step 1001, a measured value of a target measurement is acquired. The target measurement includes a beam failure detection (BFD), and the measured value includes a plurality of second SINRs obtained by measuring each of a plurality of downlink reference signals a plurality of times within a set duration.

In embodiments of the present invention, the step 1001 may be performed in any manner as described in embodiments of the present invention, which is not limited in embodiments of the present invention, and will not be repeated here.

In embodiments of the present invention, for the explanations and illustrations of the set duration, reference may be made to any embodiment of the present invention, and details are not repeated here.

In embodiments of the present invention, the terminal device may measure each of the plurality of downlink reference signals a plurality of times within the set duration to obtain a plurality of measured values corresponding to each downlink reference signal, which are recorded as a plurality of second SINRs.

In step 1002, a first quality threshold is determined according to threshold indication information in reference information corresponding to the target measurement.

In embodiments of the present invention, the step 1002 may be performed in any manner as described in embodiments of the present invention, which is not limited in embodiment of the present invention, and will not be repeated here.

In step 1003, in response to the plurality of second SINRs corresponding to each of the plurality of downlink reference signals all being greater than the first quality threshold, it is determined that the target event to be triggered by the terminal device is the relaxation entry event; or in response to the plurality of second SINRs corresponding to at least one of the plurality of downlink reference signals all being greater than the first quality threshold, it is determined that the target event is the relaxation entry event.

In embodiments of the present invention, in a case where the plurality of second SINRs corresponding to each downlink reference signal are all greater than the first quality threshold, it may be determined that the target event to be triggered by the terminal device is the relaxation entry event. Alternatively, in a case where a plurality of second SINRs corresponding to at least one downlink reference signal are all greater than the first quality threshold, it may be determined that the target event to be triggered by the terminal device is the relaxation entry event, that is, it is determined that the terminal device meets the relaxation entry metric.

It should be noted that, when the second SINR is greater than the first quality threshold, it may be determined that the signal quality of the downlink reference signal is better, and at this time, the relaxation entry event may also be called a good cell signal quality event.

In embodiments of the present invention, it may be determined in any serving cell that the signal quality of the reference signal is better, and the serving cell to which the reference information is applicable may be determined in any manner as described in various embodiments of the present invention.

In the measurement method according to embodiments of the present invention, the measured value of the target measurement is acquired, and the target measurement includes the beam failure detection (BFD); the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

In any embodiment of the present invention, an event, Event R2 (including the relaxation entry event and the relaxation exit event), may be defined through a protocol.

As an example, the relaxation entry event, such as the good cell signal quality event, may be marked as Event R2-1, and the Event R2-1 may be determined by a good signal quality metric. That is, when a plurality of reference signals (RSs) are configured in a serving cell, each RS may be measured, and the measured SINR corresponding to the RS may be compared with a threshold to determine whether the terminal device meets the good signal quality metric.

Further, it may be further determined whether the terminal device meets the good signal quality metric within the set duration T 1.

Embodiment 9: within the set duration T1, when all RSs meet: measured value $SINR_{measured}$ > first quality threshold ($Q_{out}$ + Offset 1), it is determined that the terminal device meets the good signal quality metric, and it is determined that the target event to be triggered by the terminal device is the relaxation entry event or the good cell signal quality event.

Embodiment 10: within the set duration T1, when any RS meets: measured value $SINR_{measured}$ > first quality threshold ($Q_{out}$ + Offset 1), it is determined that the terminal device meets the good signal quality metric, and it is determined that the target event to be triggered by the terminal device is the relaxation entry event or the good cell signal quality event.

It should be noted that, in embodiments of the present invention, the serving cell to which the good signal quality metric is applicable is any serving cell, that is, any serving cell can apply the good signal quality metric, and specifically, the serving cell to which the good signal quality metric is applicable may be determined in any manner as described in embodiments of the present invention.

Referring to FIG. 11, FIG. 11 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 11, the measurement method may include but not limited to the following steps.

In step 1101, a measured value of a target measurement is acquired. The target measurement includes a beam failure detection (BFD), and the measured value includes a plurality of second SINRs obtained by measuring each of a plurality of downlink reference signals a plurality of times within a set duration.

In embodiments of the present invention, the step 1101 may be performed in any manner as described in embodiments of the present invention, which is not limited in embodiments of the present invention, and will not be repeated here.

In step 1102, a second quality threshold is determined according to threshold indication information in reference information corresponding to the target measurement.

In embodiments of the present invention, the step 1102 may be performed in any manner as described in embodiments of the present invention, which is not limited in embodiments of the present invention, and will not be repeated here.

In step 1103, in response to the plurality of second SINRs corresponding to at least one of the plurality of downlink reference signals all being less than or equal to the second quality threshold, it is determined that the target event to be triggered by the terminal device is the relaxation exit event; or in response to the plurality of second SINRs corresponding to each of the plurality of downlink reference signals all being less than or equal to the second quality threshold, it is determined that the target event is the relaxation exit event.

In embodiments of the present invention, if there exists at least one downlink reference signal to which the plurality of second SINRs corresponding are less than or equal to the second quality threshold, it may be determined that the target event to be triggered by the terminal device is the relaxation exit event. Alternatively, if the plurality of second SINRs corresponding to each downlink reference signal all are less than or equal to the second quality threshold, it may be determined that the target event to be triggered by the terminal device is the relaxation exit event, that is, it is determined that the terminal device meets the relaxation exit criteria.

It should be noted that, when the second SINR is less than or equal to the second quality threshold, it may be determined that the signal quality of the reference signal is poor. At this time, the relaxation exit event may also be called a non-good cell signal quality event or a bad cell signal quality event.

In embodiments of the present invention, it may be determined in any serving cell that the signal quality of the reference signal is better, and the serving cell to which the reference information is applicable may be determined in any manner as described in various embodiments of the present invention.

In the measurement method according to embodiments of the present invention, the measured value of the target measurement is acquired, and the target measurement includes the beam failure detection (BFD); the target event to be triggered by the terminal device is determined according to the measured value and the reference information corresponding to the target measurement, and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

In any embodiment of the present invention, an event, Event R2 (including the relaxation entry event and the relaxation exit event) may be defined through a protocol.

As an example, the relaxation exit event, such as the non-good cell signal quality event or the bad cell signal quality event, may be marked as Event R2-2, and the Event R2-2 may be determined by a good signal quality metric. That is, when a plurality of reference signals (RSs) are configured in a serving cell, each RS may be measured, and the measured SINR corresponding to the RS may be compared with a threshold to determine whether the terminal device meets the good signal quality metric.

Further, it may be further determined whether the terminal device meets the good signal quality metric within the set duration T 1.

Embodiment 11: within the set duration T1, when any RS meets: measured value $SINR_{measured}$ < second quality threshold ($Q_{out}$ + Offset2), it is determined that the terminal device does not meet the good signal quality metric, and it is determined that the target event to be triggered by the terminal device is the relaxation exit event, the non-good cell signal quality event or the bad cell signal quality event.

Embodiment 12: within the set duration T1, when all RSs meet: measured value $SINR_{measured}$ < second quality threshold ($Q_{out}$ + Offset2), the terminal device does not meet the good signal quality metric, and it is determined that the target event to be triggered by the terminal device is the relaxation exit event, the non-good cell signal quality event or the bad cell signal quality event.

It should be noted that, in embodiments of the present invention, the serving cell to which the good signal quality metric is applicable is any serving cell, that is, any serving cell can apply the good signal quality metric, and specifically, the serving cell to which the reference information is applicable may be determined in any manner as described in embodiments of the present invention.

It should be noted that, in the foregoing embodiments, only one of the low movability metric and the good signal quality metric is configured as examples, and in practical applications, both the low movability metric and the good signal quality metric may be configured. For example, both the Event R1 and the Event R2 may be configured.

As an example, when the target event is the relaxation entry event, two embodiments need to be satisfied at the same time, one of which may be the embodiment corresponding to FIG. 4 or FIG. 5, and the other one of which may be the embodiment corresponding to FIG. 8 or FIG. 10.

It can be understood that embodiment corresponding to FIG. 4 or FIG. 5 can only be implemented in the primary serving cell (PCell and/or PSCell), while the embodiment corresponding to FIG. 8 or FIG. 10 can be implemented in any serving cell. That is, if both the low movability metric and the good signal quality metric are configured, only in the primary serving cell (PCell and/or PSCell), both of the low movability metric and the good signal quality metric are implemented, while in the secondary serving cell (SCell), only good signal quality criteria is implemented.

In a possible implementation, the reference information may include the target period, the first difference threshold, and the threshold indication information.

In an example, the measured value may include at least one first RSRP obtained by measuring a downlink reference signal at least one time within the target period, or include at least one first RSRP obtained by measuring at least one downlink reference signal within the target period. The measured value also includes a plurality of first SINRs obtained by measuring a plurality of downlink reference signals.

A first difference between each of the at least one first RSRP and a corresponding reference value may be determined, and in response to the first difference corresponding to each of the at least one first RSRP being less than the first difference threshold in the reference information, it is determined that the terminal device meets the low movability metric.

In the case where the terminal device meets the low movability metric, it may be further determined whether the terminal device meets a good cell signal quality metric. For example, in response to the plurality of first SINRs all being greater than the first quality threshold (the first quality threshold is determined according to the threshold indication information), it is determined that the terminal device meets the good cell signal quality metric, or in response to at least one of the plurality of first SINRs being greater than the first quality threshold, it is determined that the terminal device meets the good signal quality metric.

In the case where the terminal device meets both the low movability metric and the good cell signal quality metric, it is determined that the target event is the relaxation entry event.

It can be understood that, in this case, only when the primary serving cell (PCell and/or PSCell) to which the reference information is applicable meets both the low movability metric and the good cell signal quality metric, can the target event be determined as a relaxation event. That is, if the primary serving cell (PCell and/or PSCell) to which the reference information is applicable cannot meet the low movability metric and the good cell signal quality metric at the same time, the target event cannot be determined as the relaxation event, even if the secondary serving cell (SCell) to which the reference information is applicable meets the good cell signal quality metric.

In another example, the measured value may include at least one first RSRP obtained by measuring a downlink reference signal at least one time within the target period, or include at least one first RSRP obtained by measuring at least one downlink reference signal within the target period. The measured value may also include a plurality of second SINRs obtained by measuring each of a plurality of downlink reference signals a plurality of times within the set duration.

A first difference between each of the at least one first RSRP and a corresponding reference value may be determined, and in response to the first difference corresponding to each of the at least one first RSRP being less than the first difference threshold in the reference information, it is determined that the terminal device meets the low movability metric.

In the case where the terminal device meets the low movability metric, it may be further determined whether the terminal device meets a good cell signal quality metric. For example, in response to the plurality of second SINRs corresponding to each downlink reference signal all being greater than the first quality threshold (the first quality threshold is determined according to the threshold indication information), it is determined that the terminal device meets the good cell signal quality metric, or in response to the plurality of second SINRs corresponding to at least one downlink reference signal all being greater than the first quality threshold, it is determined that the terminal device meets the good signal quality metric.

In the case where the terminal device meets both the low movability metric and the good cell signal quality metric, it is determined that the target event is the relaxation entry event.

In another example, the measured value includes at least one first RSRP obtained by measuring a downlink reference signal at least one time within the target period ($T_{SearchDeltaP}$), or includes at least one first RSRP obtained by measuring at least one downlink reference signal within the target period ($T_{SearchDeltaP}$). In addition, the measured value also includes a plurality of second RSRPs obtained by measuring the downlink reference signal a plurality of times within the set duration (T 1) after the target period, or includes a plurality of second RSRPs obtained by measuring a plurality of downlink reference signals within the set duration (T1). In addition, the measured value also includes a plurality of first SINRs obtained by measuring a plurality of downlink reference signals.

A first difference between each of the at least one first RSRP and a corresponding reference value may be determined, in response to the first difference corresponding to each of the at least one first RSRP being less than the first difference threshold in the reference information, a second difference between each of the plurality of second RSRPs and a corresponding reference value is determined, and in response to the second difference corresponding to each of the plurality of second RSRPs being less than the first difference threshold, it is determined that the terminal device meets the low movability metric.

In the case where the terminal device meets the low movability metric, it may be further determined whether the terminal device meets the good cell signal quality metric. For example, in response to the plurality of first SINRs all being greater than the first quality threshold (the first quality threshold is determined according to the threshold indication information), it is determined that the terminal device meets the good cell signal quality metric, or in response to at least one of the plurality of first SINRs being greater than the first quality threshold, it is determined that the terminal device meets the good signal quality metric.

In the case where the terminal device meets both the low movability metric and the good cell signal quality metric, it is determined that the target event is the relaxation entry event.

It can be understood that, in this case, only when the primary serving cell (PCell and/or PSCell) to which the reference information is applicable meets both the low movability metric and the good cell signal quality metric, can the target event be determined as a relaxation event. That is, if the primary serving cell (PCell and/or PSCell) to which the reference information is applicable cannot meet the low movability metric and the good cell signal quality metric at the same time, the target event cannot be determined as the relaxation event, even if the secondary serving cell (SCell) to which the reference information is applicable meets the good cell signal quality metric.

In another example, the measured value includes at least one first RSRP obtained by measuring a downlink reference signal at least one time within the target period ($T_{SearchDeltaP}$), or includes at least one first RSRP obtained by measuring at least one downlink reference signal within the target period ($T_{SearchDeltaP}$). In addition, the measured value also includes a plurality of second RSRPs obtained by measuring the downlink reference signal a plurality of times within the set duration (T 1) after the target period, or includes a plurality of second RSRPs obtained by measuring a plurality of downlink reference signals within the set duration (T1). In addition, the measured value also includes a plurality of second SINRs obtained by measuring each of a plurality of downlink reference signals a plurality of times within the set duration.

A first difference between each of the at least one first RSRP and a corresponding reference value may be determined, in response to the first difference corresponding to each of the at least one first RSRP being less than the first difference threshold in the reference information, a second difference between each of the plurality of second RSRPs and a corresponding reference value is determined, and in response to the second difference corresponding to each of the plurality of second RSRPs being less than the first difference threshold, it is determined that the terminal device meets the low movability metric.

In the case where the terminal device meets the low movability metric, it may be further determined whether the terminal device meets a good cell signal quality metric. For example, in response to the plurality of second SINRs corresponding to each downlink reference signal all being greater than the first quality threshold, it is determined that the terminal device meets the good cell signal quality metric, or in response to the plurality of second SINRs corresponding to at least one downlink reference signal all being greater than the first quality threshold, it is determined that the terminal device meets the good signal quality metric.

In the case where the terminal device meets both the low movability metric and the good cell signal quality metric, it is determined that the target event is the relaxation entry event.

It can be understood that, in this case, only when the primary serving cell (PCell and/or PSCell) to which the reference information is applicable meets both the low movability metric and the good cell signal quality metric, can the target event be determined as a relaxation event. That is, if the primary serving cell (PCell and/or PSCell) to which the reference information is applicable cannot meet the low movability metric and the good cell signal quality metric at the same time, the target event cannot be determined as the relaxation event, even if the secondary serving cell (SCell) to which the reference information is applicable meets the good cell signal quality metric.

For example, when the Event R1-1 (embodiment 1 or embodiment 2) and the Event R2-1 (embodiment 5, embodiment 6, embodiment 9 or embodiment 10) are satisfied at the same time, it is determined that the target event to be triggered by the terminal device is the relaxation entry event, and the relaxation entry event may be the good cell signal quality event and the low movability event, which for example is marked as Event R3-1.

As another example, when the target event is the relaxation exit event, both of the two embodiments may be satisfied at the same time, or only one of the two embodiments may be satisfied. One of the two embodiments may be the embodiment corresponding to FIG. 6 or FIG. 7, and the other one of the two embodiments may be the embodiment corresponding to FIG. 9 or FIG. 11.

Similarly, it can be understood that embodiment corresponding to FIG. 6 or FIG. 7 can only be implemented in the primary serving cell (PCell and/or PSCell), while the embodiment corresponding to FIG. 9 or FIG. 11 can be implemented in any serving cell. That is, if both the low movability metric and the good signal quality metric are configured, only in the primary serving cell (PCell and/or PSCell), both of the low movability metric and the good signal quality metric are implemented, while in the secondary serving cell (SCell), only good signal quality criteria is implemented.

In a possible implementation, the reference information may include the target period, the second difference threshold, and the threshold indication information.

In an example, the measured value includes at least one first RSRP obtained by measuring a downlink reference signal at least one time within the target period, or includes at least one first RSRP obtained by measuring at least one downlink reference signal within the target period. The measured value also includes a plurality of first SINRs obtained by measuring a plurality of downlink reference signals.

A first difference between each of the at least one first RSRP and a corresponding reference value may be determined, and in response to existence of at least one first RSRP with the respective first difference being greater than or equal to the second difference threshold in the reference information, it is determined that the terminal device does not meet the low movability metric.

The second quality threshold may also be determined according to the threshold indication information, and in response to at least one of the plurality of first SINRs being less than or equal to the second quality threshold, it is determined that the terminal device does not meet the good cell signal quality metric; or in response to the plurality of first SINRs all being less than or equal to the second quality threshold, it is determined that the terminal device does not meet the good cell signal quality metric.

When the terminal device does not meet the low movability metric, and/or the terminal device does not meet the good cell signal quality metric, it is determined that the target event is the relaxation exit event.

In another example, the measured value includes at least one first RSRP obtained by measuring a downlink reference signal at least one time within the target period, or includes at least one first RSRP obtained by measuring at least one downlink reference signal within the target period. The measured value also includes a plurality of second SINRs obtained by measuring each of a plurality of downlink reference signals a plurality of times within the set duration.

A first difference between each of the at least one first RSRP and a corresponding reference value may be determined, and in response to existence of at least one first RSRP with the respective first difference being greater than or equal to the second difference threshold in the reference information, it is determined that the terminal device does not meet the low movability metric.

The second quality threshold may also be determined according to the threshold indication information, and in response to the plurality of second SINRs corresponding to at least one of the plurality of downlink reference signals all being less than or equal to the second quality threshold, it is determined that the terminal device does not meet the cell signal quality metric; or in response to the plurality of second SINRs corresponding to each of the plurality of downlink reference signals all being less than or equal to the second quality threshold, it is determined that the terminal device does not meet the good cell signal quality metric.

When the terminal device does not meet the low movability metric, and/or the terminal device does not meet the good cell signal quality metric, it is determined that the target event is the relaxation exit event.

In another example, the measured value includes at least one first RSRP obtained by measuring a downlink reference signal at least one time within the target period, or includes at least one first RSRP obtained by measuring at least one downlink reference signal within the target period. In addition, the measured value also includes a plurality of second RSRPs obtained by measuring the downlink reference signals a plurality of times within the set duration after the target period, or includes a plurality of second RSRPs obtained by measuring a plurality of downlink reference signals within the set duration. The measured value also includes a plurality of first SINRs obtained by measuring a plurality of downlink reference signals.

A first difference between each of the at least one first RSRP and a corresponding reference value may be determined, in response to existence of at least one first RSRP with the respective first difference being greater than or equal to the second difference threshold, a second difference between each of the plurality of second RSRPs and a corresponding reference value is determined, and in response to existence of at least one second RSRP with the respective second difference being greater than or equal to the second difference threshold, it is determined that the terminal device does not meet the low movability metric.

The second quality threshold may also be determined according to the threshold indication information, and in response to at least one of the plurality of first SINRs being less than or equal to the second quality threshold, it is determined that the terminal device does not meet the good cell signal quality metric; or in response to the plurality of first SINRs all being less than or equal to the second quality threshold, it is determined that the terminal device does not meet the good cell signal quality metric.

When the terminal device does not meet the low movability metric, and/or the terminal device does not meet the good cell signal quality metric, it is determined that the target event is the relaxation exit event.

In another example, the measured value includes at least one first RSRP obtained by measuring a downlink reference signal at least one time within the target period, or includes at least one first RSRP obtained by measuring at least one downlink reference signal within the target period. In addition, the measured value also includes a plurality of second RSRPs obtained by measuring the downlink reference signals a plurality of times within the set duration after the target period, or includes a plurality of second RSRPs obtained by measuring a plurality of downlink reference signals within the set duration. The measured value also includes a plurality of second SINRs obtained by measuring each of a plurality of downlink reference signals a plurality of times within the set duration.

A first difference between each of the at least one first RSRP and a corresponding reference value may be determined, in response to existence of at least one first RSRP with the respective first difference being greater than or equal to the second difference threshold, a second difference between each of the plurality of second RSRPs and a corresponding reference value is determined, and in response to existence of at least one second RSRP with the respective second difference being greater than or equal to the second difference threshold, it is determined that the terminal device does not meet the low movability metric.

The second quality threshold may also be determined according to the threshold indication information, and in response to the plurality of second SINRs corresponding to at least one of the plurality of downlink reference signals all being less than or equal to the second quality threshold, it is determined that the terminal device does not meet the good cell signal quality metric; or in response to the plurality of second SINRs corresponding to each of the plurality of downlink reference signals all being less than or equal to the second quality threshold, it is determined that the terminal device does not meet the good cell signal quality metric.

When the terminal device does not meet the low movability metric, and/or the terminal device does not meet the good cell signal quality metric, it is determined that the target event is the relaxation exit event.

For example, when one of the Event R1-2 (Embodiment 3 or Embodiment 4) or the Event R2-2 (Embodiment 7, Embodiment 8, Embodiment 11 or Embodiment 12) is satisfied, it is determined that the target event to be triggered by the terminal device is the relaxation exit event, which may be the non-good cell signal quality event (bad cell signal quality event) and/or the non-low movability event (high movability event), and may be for example marked as Event R3-2.

In any embodiment of the present invention, the network device may configure the reference information corresponding to the low movability metric via an RRC message.

As an example, the reference information of the low movability metric includes: the target period $T_{\text{SearchDeltaP}}$, the first difference threshold $S_{\text{SearchDeltaP}}$ and/or the second difference threshold SsearchDeltaP'.

For the low movability metric, the measured value obtained by the terminal device may be L3-RSRP.

As an example, the reference information of the good cell signal quality metric may include the threshold indication information (such as Offset 1 and/or Offset2).

For the good cell signal quality metric, the measured value obtained by the terminal device may be L1-SINR.

In any embodiment of the present invention, the network device may configure at least one event for the beam failure detection (BFD) relaxation.

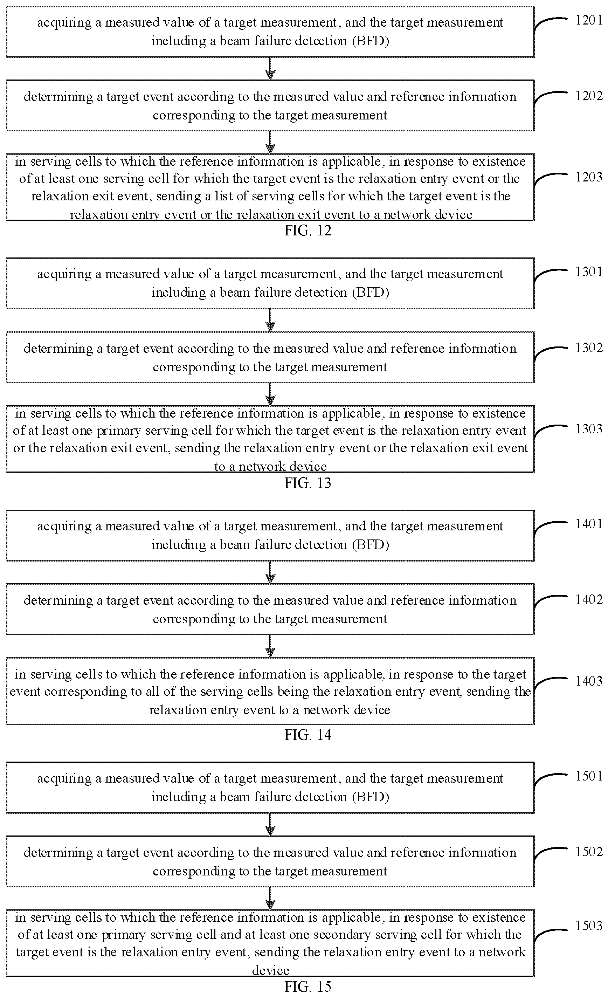

Referring to FIG. 12, FIG. 12 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 12, the measurement method may include but not limited to the following steps.

In step 1201, a measured value of a target measurement is acquired. The target measurement includes a beam failure detection (BFD).

In step 1202, a target event is determined according to the measured value and reference information corresponding to the target measurement.

The steps 1201 to 1202 may be implemented in any manner as described in the above embodiments with reference o FIG. 2 to FIG. 11 of the present invention, which are not limited in embodiments of the present invention, and will not be repeated here.

In step 1203, in serving cells to which the reference information is applicable, in response to existence of at least one serving cell for which the target event is the relaxation entry event or the relaxation exit event, a list of serving cells for which the target event is the relaxation entry event or the relaxation exit event is sent to a network device.

In embodiments of the present invention, in serving cells to which the reference information is applicable, triggering of the target event is determined for each serving cell, and a list of serving cells for which the target event is the relaxation entry event or the relaxation exit event is sent to the network device.

As an example, in serving cells to which the reference information of the low movability metric is applicable, the low movability metric is judged for each serving cell, and a list of serving cells that meet the low movability metric, i.e., a list of serving cells for which the target event is the Event R1-1 (relaxation entry event), is sent to the network device.

Similarly, in serving cells to which the reference information of the low movability metric is applicable, the low movability metric is judged for each serving cell, and a list of serving cells that do not meet the low movability metric, i.e., a list of serving cells for which the target event is the Event R1-2 (relaxation exit event), is sent to the network device.

As another example, in serving cells to which the reference information of the good signal quality metric is applicable, the good signal quality metric is judged for each serving cell, and a list of serving cells that meet the good signal quality metric, i.e., a list of serving cells for which the target event is the Event R2-1 (relaxation entry event), is sent to the network device.

Similarly, in serving cells to which the reference information of the good signal quality metric is applicable, the good signal quality metric is judged for each serving cell, and a list of serving cells that do not meet the good signal quality metric, i.e., a list of serving cells for which the target event is the Event R2-2 (relaxation exit event), is sent to the network device.

As another example, in serving cells to which the reference information of the low movability metric and the good signal quality metric is applicable, the low movability metric and the good signal quality metric are judged for each serving cell, and a list of serving cells that meet both the low movability metric and the good signal quality metric, i.e., a list of serving cells for which the target event is Event R3-1 (relaxation entry event), is sent to the network device. It should be noted that, as mentioned above, if the primary serving cell (PCell and/or PSCell) to which the reference information is applicable does not meet the low movability metric and the good signal quality metric at the same time, a list of secondary serving cells which meet the good signal quality metric and to which the reference information is applicable will not be sent to the network device. That is, the list of serving cells must include the primary serving cell.

Similarly, in serving cells to which the reference information of the low movability metric and the good signal quality metric is applicable, the low movability metric and the good signal quality metric are judged for each serving cell, and a list of serving cells that do not meet the low movability metric or the good signal quality metric, i.e., a list of serving cells for which the target event is the Event R3-2 (relaxation exit event), is sent to the network device.

In embodiments of the present invention, the terminal device may send the list of serving cells via UE assistance information (UAI), a radio resource control (RRC) message, or a measurement report message.

In some embodiments, the terminal device also sends the target event to the network device.

In some implementations, in response to the target event being the relaxation entry event, the terminal device sends the relaxation entry event to the network device, and can receive a relaxation instruction sent by the network device, and the relaxation instruction is used to control the terminal device to enter the BFD relaxation state.

In a possible implementation of embodiments of the present invention, the relaxation instruction may further include a target proportional coefficient. The target proportional coefficient may be generated by the network device according to a proportional coefficient in interval indication information sent by the terminal device, or the target proportional coefficient may also be automatically generated by the network device, which is not limited in the present invention. After entering the relaxation state, the terminal device is able to determine a target measurement interval according to the target proportional coefficient in the relaxation instruction and a second measurement interval configured by the network device. For example, a product of the target proportional coefficient and the second measurement interval may be used as the target measurement interval, so that the terminal device can perform the target measurement periodically according to the target measurement interval in the relaxation state.

In some implementations, in response to the target event being the relaxation exit event, the terminal device sends the relaxation exit event to the network device, and can automatically exit the BFD relaxation without receiving a relaxation exit instruction sent by the network device.

In the measurement method according to embodiments of the present invention, the measured value of the target measurement is acquired, the target measurement includes the beam failure detection (BFD), the target event is determined according to the measured value and the reference information corresponding to the target measurement, and in serving cells to which the reference information is applicable, in response to existence of at least one serving cell for which the target event is the relaxation entry event or the relaxation exit event, the list of serving cells for which the target event is the relaxation entry event or the relaxation exit event is sent to the network device. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

Referring to FIG. 13, FIG. 13 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 13, the measurement method may include but not limited to the following steps.

In step 1301, a measured value of a target measurement is acquired. The target measurement includes a beam failure detection (BFD).

In step 1302, a target event is determined according to the measured value and reference information corresponding to the target measurement.

The steps 1301 to 1302 may be implemented in any manner as described in the above embodiments with reference o FIG. 2 to FIG. 11 of the present invention, which are not limited in embodiments of the present invention, and will not be repeated here.

In step 1303, in serving cells to which the reference information is applicable, in response to existence of at least one primary serving cell for which the target event is the relaxation entry event or the relaxation exit event, the relaxation entry event or the relaxation exit event is sent to a network device.

In embodiments of the present invention, in serving cells to which the reference information is applicable, triggering of the target event is determined for each serving cell, there exists at least one primary serving cell for which the target event is the relaxation entry event or the relaxation exit event, and the relaxation entry event or the relaxation exit event is sent to the network device. That is, the list of serving cells for which the target event is the relaxation entry event or the relaxation exit event must include at least one of a PCell and a PSCell.

As an example, in serving cells to which the reference information of the low movability metric is applicable, the low movability metric is judged for each serving cell, and in response to existence of at least one primary serving cell that meets the low movability metric, that is, in response to existence of at least one primary serving cell for which the target event is Event R1-1 (relaxation entry event), the relaxation entry event is sent to the network device.

Similarly, in serving cells to which the reference information of the low movability metric is applicable, the low movability metric is judged for each serving cell, and in response to existence of at least one primary serving cell that does not meet the low movability metric, that is, in response to existence of at least one primary serving cell for which the target event is Event R1-2 (relaxation exit event), the relaxation exit event is sent to the network device.

As another example, in serving cells to which the reference information of the good signal quality metric is applicable, the good signal quality metric is judged for each serving cell, and in response to existence of at least one primary serving cell that meets the good signal quality metric, that is, in response to existence of at least one primary serving cell for which the target event is Event R2-1 (relaxation entry event), the relaxation entry event is sent to the network device.

Similarly, in serving cells to which the reference information of the good signal quality metric is applicable, the good signal quality metric is judged for each serving cell, and in response to existence of at least one primary serving cell that does not meet the good signal quality metric, that is, in response to existence of at least one primary serving cell for which the target event is Event R2-2 (relaxation exit event), the relaxation exit event is sent to the network device.

As another example, in serving cells to which the reference information of the low movability metric and the good signal quality metric is applicable, the low movability metric and the good signal quality metric are judged for each serving cell, and in response to existence of at least one primary serving cell that meets both the low movability metric and the good signal quality metric, that is, in response to existence of at least one primary serving cell for which the target event is Event R3-1 (relaxation entry event), the relaxation entry event is sent to the network device.

Similarly, in serving cells to which the reference information of the low movability metric and the good signal quality metric is applicable, the low movability metric and the good signal quality metric are judged for each serving cell, and in response to existence of at least one primary serving cell that does not meet the low movability metric or the good signal quality metric, that is, in response to existence of at least one primary serving cell for which the target event is Event R3-2 (relaxation exit event), the relaxation exit event is sent to the network device.

In embodiments of the present invention, the terminal device may send the target event via UE assistance information (UAI), a radio resource control (RRC) message, or a measurement report message.

In some embodiments, the target event includes a list of serving cells of the target event.

In some implementations, in response to the target event being the relaxation entry event, the terminal device sends the relaxation entry event to the network device, and can receive a relaxation instruction sent by the network device, and the relaxation instruction is used to control the terminal device to enter the BFD relaxation state.

In a possible implementation of embodiments of the present invention, the relaxation instruction may further include a target proportional coefficient. The target proportional coefficient may be generated by the network device according to a proportional coefficient in interval indication information sent by the terminal device, or the target proportional coefficient may also be automatically generated by the network device, which is not limited in the present invention. After entering the relaxation state, the terminal device is able to determine a target measurement interval according to the target proportional coefficient in the relaxation instruction and a second measurement interval configured by the network device. For example, a product of the target proportional coefficient and the second measurement interval may be used as the target measurement interval, so that the terminal device can perform the target measurement periodically according to the target measurement interval in the relaxation state.

In some implementations, in response to the target event being the relaxation exit event, the terminal device sends the relaxation exit event to the network device, and can automatically exit the BFD relaxation without receiving a relaxation exit instruction sent by the network device.

In the measurement method according to embodiments of the present invention, the measured value of the target measurement is acquired, the target measurement includes the beam failure detection (BFD); the target event is determined according to the measured value and the reference information corresponding to the target measurement, and in serving cells to which the reference information is applicable, in response to existence of at least one primary serving cell for which the target event is the relaxation entry event or the relaxation exit event, the relaxation entry event or the relaxation exit event is sent to the network device. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

Referring to FIG. 14, FIG. 14 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 14, the measurement method may include but not limited to the following steps.

In step 1401, a measured value of a target measurement is acquired. The target measurement includes a beam failure detection (BFD).

In step 1402, a target event is determined according to the measured value and reference information corresponding to the target measurement.

The steps 1401 to 1402 may be respectively implemented in any manner as described in embodiments of the present invention, which are not limited in embodiments of the present invention, and will not be repeated here.

In step 1403, in serving cells to which the reference information is applicable, in response to the target event corresponding to all of the serving cells being the relaxation entry event, the relaxation entry event is sent to a network device.

In embodiments of the present invention, in serving cells to which the reference information is applicable, triggering of the target event is determined for each serving cell, and only when the target event corresponding to all of the serving cells is the relaxation entry event, the relaxation entry event will be sent to the network device.

As an example, in serving cells to which the reference information of the low movability metric is applicable, the low movability metric is judged for each serving cell, and in response to all of the serving cells meeting the low movability metric, that is, in response to the target event corresponding to all of the serving cells being Event R1-1 (relaxation entry event), the relaxation entry event is sent to the network device.

As another example, in serving cells to which the reference information of the good signal quality metric is applicable, the good signal quality metric is judged for each serving cell, and in response to all of the serving cells meeting the good signal quality metric, that is, in response to the target event corresponding to all of the serving cells being Event R2-1 (relaxation entry event), the relaxation entry event is sent to the network device.

As another example, in serving cells to which the reference information of the low movability metric and the good signal quality metric is applicable, the low movability metric and the good signal quality metric are judged for each serving cell, and in response to all of the serving cells meeting both the low movability metric and the good signal quality metric, that is, in response to the target event corresponding to all of the serving cells being Event R3-1 (relaxation entry event), the relaxation entry event is sent to the network device.

In embodiments of the present invention, the terminal device may send the relaxation entry event via UE assistance information (UAI), a radio resource control (RRC) message, or a measurement report message.

In some embodiments, the relaxation entry event includes a list of serving cells of the relaxation entry event.

In some implementations, the relaxation entry event includes indication information, the indication information may be pre-specified by a protocol, and the indication information is used to indicate all of the serving cells are which serving cells.

In some implementations, in response to the target event being the relaxation entry event, the terminal device sends the relaxation entry event to the network device, and can receive a relaxation instruction sent by the network device, and the relaxation instruction is used to control the terminal device to enter the BFD relaxation state.

In a possible implementation of embodiments of the present invention, the relaxation instruction may further include a target proportional coefficient. The target proportional coefficient may be generated by the network device according to a proportional coefficient in interval indication information sent by the terminal device, or the target proportional coefficient may also be automatically generated by the network device, which is not limited in the present invention. After entering the relaxation state, the terminal device is able to determine a target measurement interval according to the target proportional coefficient in the relaxation instruction and a second measurement interval configured by the network device. For example, a product of the target proportional coefficient and the second measurement interval may be used as the target measurement interval, so that the terminal device can perform the target measurement periodically according to the target measurement interval in the relaxation state.

In the measurement method according to embodiments of the present invention, the measured value of the target measurement is acquired, the target measurement includes the beam failure detection (BFD); the target event is determined according to the measured value and the reference information corresponding to the target measurement, and in serving cells to which the reference information is applicable, in response to the target event corresponding to all of the serving cells being the relaxation entry event, the relaxation entry event is sent to the network device. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

Referring to FIG. 15, FIG. 15 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 15, the measurement method may include but not limited to the following steps.

In step 1501, a measured value of a target measurement is acquired. The target measurement includes a beam failure detection (BFD).

In step 1502, a target event is determined according to the measured value and reference information corresponding to the target measurement.

The steps 1501 to 1502 may be respectively implemented in any manner as described in embodiments of the present invention, which are not limited in embodiments of the present invention, and will not be repeated here.

In step 1503, in serving cells to which the reference information is applicable, in response to existence of at least one primary serving cell and at least one secondary serving cell for which the target event is the relaxation entry event, the relaxation entry event is sent to a network device.

In embodiments of the present invention, in serving cells to which the reference information is applicable, triggering of the target event is determined for each serving cell, there exists at least one primary serving cell and at least one secondary serving cell for which the target event is the relaxation entry event, and the relaxation entry event is sent to the network device. That is, the list of serving cells for which the target event is the relaxation entry event must include at least one of a PCell and a PSCell as well as a SCell.

As an example, in serving cells to which the reference information of the low movability metric is applicable, the low movability metric is judged for each serving cell, and in response to existence of at least one primary serving cell and at least one secondary serving cell that meet the low movability metric, that is, in response to existence of at least one primary serving cell and at least one secondary serving cell for which the target event is Event R1-1 (relaxation entry event), the relaxation entry event is sent to the network device.

As another example, in serving cells to which the reference information of the good signal quality metric is applicable, the good signal quality metric is judged for each serving cell, and in response to existence of at least one primary serving cell and at least one secondary serving cell that meet the good signal quality metric, that is, in response to existence of at least one primary serving cell and at least one secondary serving cell for which the target event is Event R2-1 (relaxation entry event), the relaxation entry event is sent to the network device.

As another example, in serving cells to which the reference information of the low movability metric and the good signal quality metric is applicable, the low movability metric and the good signal quality metric are judged for each serving cell, and in response to existence of at least one primary serving cell that meets both the low movability metric and the good signal quality metric and existence of at least one secondary serving cell that meets the good signal quality metric, that is, in response to existence of at least one primary serving cell and at least one secondary serving cell for which the target event is Event R3-1 (relaxation entry event), the relaxation entry event is sent to the network device.

In embodiments of the present invention, the terminal device may send the relaxation entry event via UE assistance information (UAI), a radio resource control (RRC) message, or a measurement report message.

In some embodiments, the relaxation entry event includes a list of serving cells of the relaxation entry event.

In some implementations, in response to the target event being the relaxation entry event, the terminal device sends the relaxation entry event to the network device, and can receive a relaxation instruction sent by the network device, and the relaxation instruction is used to control the terminal device to enter the BFD relaxation state.

In a possible implementation of embodiments of the present invention, the relaxation instruction may further include a target proportional coefficient. The target proportional coefficient may be generated by the network device according to a proportional coefficient in interval indication information sent by the terminal device, or the target proportional coefficient may also be automatically generated by the network device, which is not limited in the present invention. After entering the relaxation state, the terminal device is able to determine a target measurement interval according to the target proportional coefficient in the relaxation instruction and a second measurement interval configured by the network device. For example, a product of the target proportional coefficient and the second measurement interval may be used as the target measurement interval, so that the terminal device can perform the target measurement periodically according to the target measurement interval in the relaxation state.

In the measurement method according to embodiments of the present invention, the measured value of the target measurement is acquired, the target measurement includes the beam failure detection (BFD); the target event is determined according to the measured value and the reference information corresponding to the target measurement, and in serving cells to which the reference information is applicable, in response to existence of at least one primary serving cell and at least one secondary serving cell for which the target event is the relaxation entry event, the relaxation entry event is sent to the network device. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event can improve the accuracy and reliability of the event determination result.

It should be noted that the foregoing possible implementations may be performed alone or in combination, which are not limited in embodiments of the present invention.

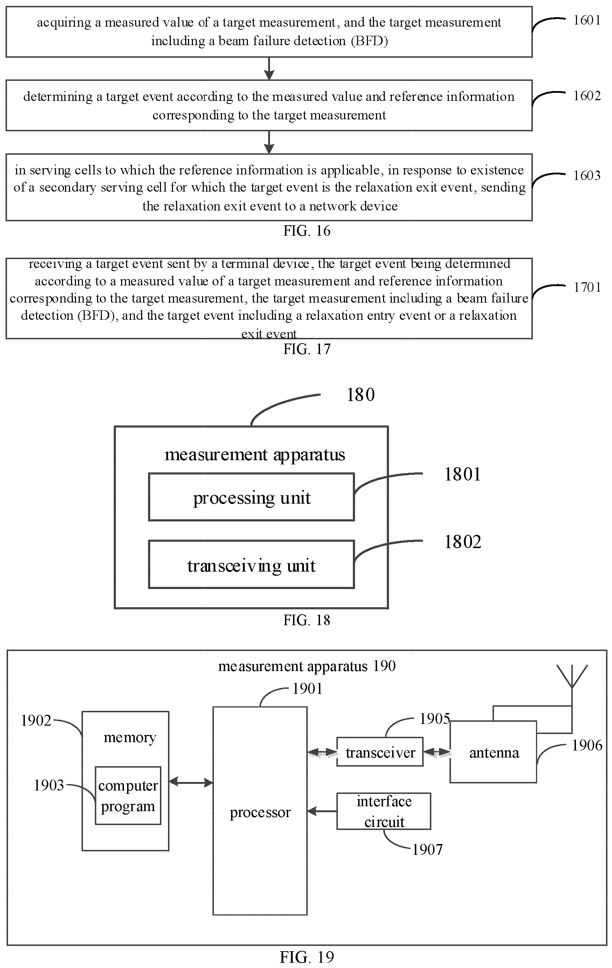

Referring to FIG. 16, FIG. 16 is a schematic flowchart of another measurement method according to embodiments of the present invention. The measurement method may be performed by the terminal device in the communication system shown in FIG. 1. The measurement method may be performed alone or in combination with any embodiment or any possible implementation of an embodiment in the present invention, or may also be performed in combination with any technical solution in the related art.

As shown in FIG. 16, the measurement method may include but not limited to the following steps.

In step 1601, a measured value of a target measurement is acquired. The target measurement includes a beam failure detection (BFD).

In step 1602, a target event is determined according to the measured value and reference information corresponding to the target measurement.

The steps 1601 to 1602 may be respectively implemented in any manner as described in embodiments of the present invention, which are not limited in embodiments of the present invention, and will not be repeated here.

In step 1603, in serving cells to which the reference information is applicable, in response to existence of a secondary serving cell for which the target event is the relaxation exit event, the relaxation exit event is sent to a network device.

In embodiments of the present invention, in serving cells to which the reference information is applicable, triggering of the target event is determined for each serving cell, there exists any secondary serving cell (SCell) for which the target event is the relaxation exit event, and the relaxation exit event is sent to the network device.

As an example, in serving cells to which the reference information of the low movability metric is applicable, the low movability metric is judged for each serving cell, and in response to existence of a secondary serving cell that does not meet the low movability metric, that is, in response to existence of a secondary serving cell for which the target event is Event R1-2 (relaxation exit event), the relaxation exit event is sent to the network device.

As another example, in serving cells to which the reference information of the good signal quality metric is applicable, the good signal quality metric is judged for each serving cell, and in response to existence of a secondary serving cell that does not meet the good signal quality metric, that is, in response to existence of a secondary serving cell for which the target event is Event R2-2 (relaxation exit event), the relaxation exit event is sent to the network device.

As another example, in serving cells to which the reference information of the low movability metric and the good signal quality metric is applicable, the low movability metric and the good signal quality metric are judged for each serving cell, and in response to existence of a secondary serving cell that does not meet the low movability metric or the good signal quality metric, that is, in response to existence of a secondary serving cell for which the target event is Event R3-2 (relaxation exit event), the relaxation exit event is sent to the network device.

In embodiments of the present invention, the terminal device may send the relaxation exit event via UE assistance information (UAI), a radio resource control (RRC) message, or a measurement report message.

In embodiments of the present invention, the terminal device sends the relaxation exit event to the network device, and can automatically exit the BFD relaxation, without receiving a relaxation exit instruction sent by the network device.

In the measurement method according to embodiments of the present invention, the measured value of the target measurement is acquired, the target measurement includes the beam failure detection (BFD); the target event is determined according to the measured value and the reference information corresponding to the target measurement, and in serving cells to which the reference information is applicable, in response to existence of a secondary serving cell for which the target event is the relaxation exit event, the relaxation exit event is sent to the network device. In this way, the terminal device can effectively determine whether the terminal device triggers the relaxation exit event according to the measured value of the target measurement and the reference information corresponding to the target measurement, so that when the terminal device triggers the relaxation exit event, it reports the relaxation exit event to the network device, and performs the relaxation mechanism. In addition, using the reference information corresponding to the target measurement and the measured value of the target measurement to determine whether the terminal device is to trigger the relaxation exit event can improve the accuracy and reliability of the event determination result.

It should be noted that the foregoing possible implementations may be performed alone or in combination, which are not limited in embodiments of the present invention.

It should be noted that, in each embodiment of the present invention, there may be a plurality of sets of reference information, and in serving cells to which each set of reference information is applicable, the target event to be triggered by the terminal device may be determined in any manner as described in embodiments with reference to FIG. 12 to FIG. 16 of the present invention.

In addition, it should be noted that, in each embodiment of the present invention, the reference information may reuse reference information of other measurements. For example, the network device has previously sent reference information of a low movability metric applied to an RLM measurement, then the reference information of the low movability metric of the BFD may reuse the reference information of the low movability metric of the RLM measurement, and the network device can only send the reference information of the good signal quality metric.

Referring to FIG. 17, FIG. 17 is a schematic flowchart of another measurement method according to embodiments of the present invention. The measurement method may be performed by the network device in the communication system shown in FIG. 1.

As shown in FIG. 17, the measurement method may include but not limited to the following steps.

In step 1701, a target event sent by a terminal device is received. The target event is determined according to a measured value of a target measurement and reference information corresponding to the target measurement, the target measurement includes a beam failure detection (BFD), and the target event includes a relaxation entry event or a relaxation exit event.

In a possible implementation of embodiments of the present invention, the network device may also send the reference information to the terminal device.

In a possible implementation of embodiments of the present invention, the network device may also send a relaxation instruction to the terminal device in response to the target event being the relaxation entry event, and the relaxation instruction is used to control the terminal device to enter the relaxation state.

In a possible implementation of embodiments of the present invention, the network device may also send a notification to the terminal device, and the notification indicates a serving cell in which the target measurement is to be performed.

In a possible implementation of embodiments of the present invention, the reference information sent by the network device to the terminal device carries indication information, and the indication information indicates a serving cell to which the reference information is applicable.

In a possible implementation of embodiments of the present invention, the target event sent by the terminal device is carried in UE assistance information (UAI), a radio resource control (RRC) message or a measurement report message.

It should be noted that the explanations and illustrations of the measurement method performed by the terminal device as described in any of the foregoing embodiments are also applicable to the measurement method performed by the network device, and their implementation principles are similar, so details are not repeated here.

In the measurement method according to embodiments of the present invention, the target event sent by the terminal device is received, the target event is determined according to the measured value of the target measurement and the reference information corresponding to the target measurement, the target measurement includes the beam failure detection (BFD), and the target event includes the relaxation entry event or the relaxation exit event. In this way, the terminal device can effectively determine whether the terminal device triggers the relaxation entry event according to the measured value of the target measurement and the reference information corresponding to the target measurement, so that when the terminal device triggers the relaxation entry event, it reports the relaxation entry event to the network device, and performs the relaxation mechanism. In addition, using the reference information corresponding to the target measurement and the measured value of the target measurement to determine whether the terminal device is to trigger the relaxation entry event or the relaxation exit event can improve the accuracy and reliability of the event determination result.

It should be noted that the foregoing possible implementations may be performed alone or in combination, which are not limited in embodiments of the present invention.

In the above embodiments provided in the present invention, the methods according to embodiments of the present invention are introduced from perspectives of the terminal device and the network device respectively. In order to implement the various functions in the methods according to the above embodiments of the present invention, the terminal device and the network device may include a hardware structure and a software module, and implement the above various functions in a form of the hardware structure, the software module, or the hardware structure plus the software module. A certain function among the above mentioned various functions may be implemented in the manner of the hardware structure, the software module, or the hardware structure plus the software module.

Referring to FIG. 18, FIG. 18 is a schematic block diagram of a measurement apparatus 180 according to embodiments of the present invention. The measurement apparatus 180 shown in FIG. 18 may include a processing unit 1801 and a transceiving unit 1802. The transceiving unit 1802 may include a sending unit and/or a receiving unit, the sending unit is configured to implement a sending function, the receiving unit is configured to implement a receiving function, and the transceiving unit 1802 may implement the sending function and/or the receiving function.

The measurement apparatus 180 may be a terminal device, an apparatus in the terminal device, or an apparatus that can be matched with the terminal device. Alternatively, the measurement apparatus 180 may be a network device, an apparatus in the network device, or an apparatus that can be matched with the network device.

When the measurement apparatus 180 is the terminal device, the processing unit 1801 is configured to acquire a measured value of a target measurement. The target measurement includes a beam failure detection (BFD). The processing unit 1801 is further configured to determine a target event to be triggered by the terminal device according to the measured value and reference information corresponding to the target measurement. The target event includes a relaxation entry event or a relaxation exit event.

In some embodiments, the processing unit 1801 is specifically configured to measure a downlink reference signal of a serving cell of the terminal device to obtain the measured value.

In some embodiments, the reference information is sent by a network device and is applicable to a primary serving cell and/or a secondary serving cell.

In some embodiments, the processing unit 1801 is further configured to determine a serving cell to which the reference information is applicable.

In some embodiments, the processing unit 1801 is specifically configured to: determine, according to a network device that sends the reference information, that the serving cell to which the reference information is applicable is a serving cell group corresponding to the network device.

In some embodiments, the processing unit 1801 is specifically configured to: receive from a network device a notification that indicates a serving cell in which the target measurement is to be performed; and determine that the serving cell to which the reference information is applicable is the serving cell in which the target measurement is to be performed.

In some embodiments, the processing unit 1801 is specifically configured to: determine the serving cell to which the reference information is applicable according to a protocol.

In some embodiments, the processing unit 1801 is specifically configured to: determine the serving cell to which the reference information is applicable according to indication information carried in the reference information. The indication information indicates the serving cell to which the reference information is applicable.

In some embodiments, the measured value further includes a plurality of second RSRPs obtained by measuring a downlink reference signal a plurality of times within a set duration after the target period or obtained by measuring a plurality of downlink reference signals within the set duration. The processing unit 1801 is specifically configured to: determine a first difference between each of the at least one first RSRP and a corresponding reference value; and in response to the first difference corresponding to each of the at least one first RSRP being less than the first difference threshold, determine the target event being the relaxation entry event. The reference value corresponding to the first RSRP is measured by the terminal device before measuring the first RSRP.

In some embodiments, the measured value further includes a plurality of second RSRPs obtained by measuring a downlink reference signal a plurality of times within a set duration after the target period or obtained by measuring a plurality of downlink reference signals within the set duration. The processing unit 1801 is specifically configured to: in response to the first difference corresponding to each of a plurality of first RSRPs being less than the first difference threshold, determine a second difference between each of the plurality of second RSRPs and a corresponding reference value; and in response to the second difference corresponding to each of the plurality of second RSRPs being less than the first difference threshold, determine the target event being the relaxation entry event. The reference value corresponding to the second RSRP is measured by the terminal device before measuring the second RSRP.

In some embodiments, the reference information includes a target period and a second difference threshold, and the measured value includes at least one first reference signal receiving power (RSRP) obtained by measuring a downlink reference signal at least one time within the target period or obtained by measuring at least one downlink reference signal within the target period. The processing unit 1801 is specifically configured to: determine a first difference between each of the at least one first RSRP and a corresponding reference value; and in response to existence of at least one first RSRP with the respective first difference being greater than or equal to the second difference threshold, determine the target event being the relaxation exit event. The reference value corresponding to the first RSRP is measured by the terminal device before measuring the first RSRP.

In some embodiments, the measured value further includes a plurality of second RSRPs obtained by measuring a downlink reference signal a plurality of times within a set duration after the target period or obtained by measuring a plurality of downlink reference signals within the set duration. The processing unit 1801 is specifically configured to: in response to existence of at least one first RSRP with the respective first difference being greater than or equal to the second difference threshold, determining a second difference between each of the plurality of second RSRPs and a corresponding reference value; and in response to existence of at least one second RSRP with the respective second difference being greater than or equal to the second difference threshold, determine the target event being the relaxation exit event. The reference value corresponding to the second RSRP is measured by the terminal device before measuring the second RSRP.

In some embodiments, the reference value is updated by:

in response to the terminal device performing a cell handover, updating the corresponding reference value according to the first RSRP;
in response to a difference obtained by subtracting the corresponding reference value from the first RSRP being greater than a third difference threshold, updating the corresponding reference value according to the first RSRP; or
in response to the first difference corresponding to the first RSRP being not less than the first difference threshold within the target period, updating the corresponding reference value according to the first RSRP, or in response to the first difference corresponding to the first RSRP being less than the second difference threshold within the target period, updating the corresponding reference value according to the first RSRP.

In some embodiments, the reference value is updated by:

in response to the terminal device performing a cell handover, updating the corresponding reference value according to the second RSRP;
in response to a difference obtained by subtracting the corresponding reference value from the second RSRP being greater than a third difference threshold, updating the corresponding reference value according to the first RSRP; or
in response to the second difference corresponding to the second RSRP being not less than the first difference threshold within the set duration, updating the corresponding reference value according to the second RSRP, or in response to the second difference corresponding to the second RSRP being less than the second difference threshold within the set duration, updating the corresponding reference value according to the second RSRP.

In some embodiments, the measured value includes a plurality of first signal to interference plus noise ratios (SINRs) obtained by measuring a plurality of downlink reference signals, and the reference information includes threshold indication information. The processing unit 1801 is specifically configured to: determine a first quality threshold according to the threshold indication information; and in response to the plurality of first SINRs all being greater than the first quality threshold, determine the target event being the relaxation entry event; or in response to at least one of the plurality of first SINRs being greater than the first quality threshold, determine the target event being the relaxation entry event.

In some embodiments, the measured value includes a plurality of first SINRs obtained by measuring a plurality of downlink reference signals, and the reference information includes threshold indication information. The processing unit 1801 is specifically configured to: determine a second quality threshold according to the threshold indication information; and in response to at least one of the plurality of first SINRs being less than or equal to the second quality threshold, determine the target event being the relaxation exit event; or in response to the plurality of first SINRs all being less than or equal to the second quality threshold, determine the target event being the relaxation exit event.

In some embodiments, the measured value includes a plurality of second SINRs obtained by measuring each of a plurality of downlink reference signals a plurality of times within a set duration, and the reference information includes threshold indication information. The processing unit 1801 is specifically configured to: determine a first quality threshold according to the threshold indication information; and in response to the plurality of second SINRs corresponding to each of the plurality of downlink reference signals all being greater than the first quality threshold, determine the target event being the relaxation entry event; or in response to the plurality of second SINRs corresponding to at least one of the plurality of downlink reference signals all being greater than the first quality threshold, determine the target event being the relaxation entry event.

In some embodiments, the measured value includes a plurality of second SINRs obtained by measuring each of a plurality of downlink reference signals a plurality of times within a set duration, and the reference information includes threshold indication information. The processing unit 1801 is specifically configured to: determine a second quality threshold according to the threshold indication information; and in response to the plurality of second SINRs corresponding to at least one of the plurality of downlink reference signals all being less than or equal to the second quality threshold, determine the target event being the relaxation exit event; or in response to the plurality of second SINRs corresponding to each of the plurality of downlink reference signals all being less than or equal to the second quality threshold, determine the target event being the relaxation exit event.

In some embodiments, the processing unit 1801 is specifically configured to: in serving cells to which the reference information is applicable, in response to existence of at least one serving cell for which the target event is the relaxation entry event or the relaxation exit event, send a list of serving cells for which the target event is the relaxation entry event or the relaxation exit event to a network device.

In some embodiments, the processing unit 1801 is further configured to: in serving cells to which the reference information is applicable, in response to existence of at least one primary serving cell for which the target event is the relaxation entry event or the relaxation exit event, send the relaxation entry event or the relaxation exit event to a network device.

In some embodiments, the processing unit 1801 is further configured to: in serving cells to which the reference information is applicable, in response to the target event corresponding to all of the serving cells being the relaxation entry event, send the relaxation entry event to a network device.

In some embodiments, the processing unit 1801 is further configured to: in serving cells to which the reference information is applicable, in response to existence of at least one primary serving cell and at least one secondary serving cell for which the target event is the relaxation entry event, send the relaxation entry event to a network device.

In some embodiments, the processing unit 1801 is further configured to: in serving cells to which the reference information is applicable, in response to existence of a secondary serving cell for which the target event is the relaxation exit event, send the relaxation exit event to a network device.

In some embodiments, the relaxation entry event, the relaxation exit event or the list of serving cells is sent to the network device via UE assistance information (UAI) or a radio resource control (RRC) message.

When the measurement apparatus 180 is the network device, the transceiving unit 1802 is configured to receive a target event sent by a terminal device. The target event is determined according to a measured value of a target measurement and reference information corresponding to the target measurement, the target measurement includes a beam failure detection (BFD), and the target event includes a relaxation entry event or a relaxation exit event.

In some embodiments, the transceiving unit 1802 is further configured to send the reference information to the terminal device.

In some embodiments, the transceiving unit 1802 is further configured to: in response to the target event being the relaxation entry event, send a relaxation instruction to the terminal device. The relaxation instruction is used to control the terminal device to enter a relaxation state.

In some embodiments, the transceiving unit 1802 is further configured to: in response to the target event being the relaxation entry event, send a relaxation instruction to the terminal device. The relaxation instruction is used to control the terminal device to enter a relaxation state.

In some embodiments, the transceiving unit 1802 is further configured to: send a notification to the terminal device. The notification indicates a serving cell in which the target measurement is to be performed.

In some embodiments, the reference information carries indication information, and the indication information indicates a serving cell to which the reference information is applicable.

In some embodiments, the target event is carried in UE assistance information (UAI) or a radio resource control (RRC) message.

It should be noted that the explanations and illustrations of the method performed at the side of the terminal device as described in any embodiment with reference to FIG. 2 to FIG. 16 or the explanations and illustrations of the method performed at the side of the network device as described in embodiments with reference to FIG. 17 are also applicable to the measurement apparatus 180, and their implementation principles are similar, so details are not repeated here.

Referring to FIG. 19, FIG. 19 is a schematic block diagram of another measurement apparatus according to embodiments of the present invention. The measurement apparatus 190 may be the terminal device or the network device, and may also be a chip, a chip system, or a processor that supports the terminal device or the network device to implement the above method. The apparatus may be used to implement the methods as described in the above method embodiments, and for details, reference may be made to the descriptions on the above method embodiments.

The measurement apparatus 190 may include one or more processors 1901. The processor 1901 may be a general-purpose processor or a special-purpose processor. For example, it may be a baseband processor or a central processing unit. The baseband processor may be configured to process a communication protocol and communication data, and the central processing unit may be configured to control the measurement apparatus (such as a base station, a baseband chip, a terminal device, a terminal device chip, a DU or a CU, etc.), execute computer programs, and process data of computer programs.

Optionally, the measurement apparatus 190 may further include one or more memories 1902 that may have stored therein a computer program 1903. The processor 1901 executes the computer program 1903 to cause the measurement apparatus 190 to implement the methods as described in the above method embodiments. The computer program 1903 may be solidified in the processor 1901, and in this case, the processor 1901 may be implemented by hardware.

Optionally, the memory 1902 may have stored therein data. The measuring apparatus 190 and the memory 1902 may be set separately or integrated together.

Optionally, the measurement apparatus 190 may further include a transceiver 1905 and an antenna 1906. The transceiver 1905 may be called a transceiving unit, a transceiving machine, a transceiving circuit or the like, for implementing a transceiving function. The transceiver 1905 may include a receiver and a transmitter. The receiver may be called a receiving machine, a receiving circuit or the like, for implementing a receiving function. The transmitter may be called a sending machine, a sending circuit or the like for implementing a sending function.

Optionally, the measurement apparatus 190 may further include one or more interface circuits 1907. The interface circuit 1907 is configured to receive a code instruction and transmit the code instruction to the processor 1901. The processor 1901 runs the code instruction to enable the measurement apparatus 190 to execute the methods as described in the foregoing method embodiments.

When the measurement apparatus 190 is the terminal device, the processor 1901 is configured to perform any method embodiment as described above with reference to FIG. 2 to FIG. 16 of the present invention.

When the measurement apparatus 190 is the network device, the processor 1901 is configured to perform the method embodiment as described above with reference to FIG. 17 of the present invention.

It should be noted that the explanations and illustrations of the measurement method in any embodiment as described above with reference to FIG. 2 to FIG. 17 are also applicable to the measurement apparatus 190 in these embodiments, and their implementation principles are similar, so details are not repeated here.

In an implementation, the processor 1901 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation, the measurement apparatus 190 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The measurement apparatus described in the above embodiments may be the terminal device or the network device, but the scope of the measurement apparatus described in the present invention is not limited thereto, and a structure of the measurement apparatus is not limited by FIG. 19. The measurement apparatus may be a stand-alone device or may be a part of a larger device. For example, the measurement apparatus may be:

(1) a stand-alone integrated circuit (IC), a chip, or a chip system or subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld machine, a mobile unit, a vehicle device, a network device, a cloud device, an artificial intelligence device, etc.;
(6) others.

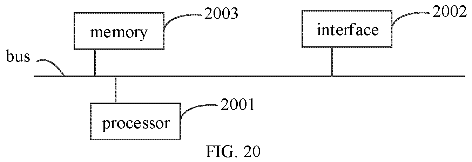

For the case where the measurement apparatus may be a chip or a system on chip, reference may be made to a schematic diagram of a chip shown in FIG. 20. The chip shown in FIG. 20 includes a processor 2001 and an interface 2002. In the chip, one or more processors 2001 may be provided, and more than one interface 2002 may be provided.

For the case where the chip is used to implement the functions of the terminal device in embodiments of the present invention, the interface 2002 is used to receive code instructions and transmit the code instructions to the processor, and the processor 2001 is configured to run the code instructions to perform the method as shown in any embodiments in FIG. 2 to FIG. 16.

For the case where the chip is used to implement the functions of the network device in embodiments of the present invention, the interface 2002 is used to receive code instructions and transmit the code instructions to the processor; and the processor 2001 is configured to run the code instructions to perform the method shown in the embodiment of FIG. 17.

Optionally, the chip further includes a memory 2003 for storing necessary computer programs and data.

It should be noted that the explanations and illustrations of the measurement method in any embodiment as described above with reference to FIG. 2 to FIG. 17 are also applicable to the chip in these embodiments, and their implementation principles are similar, so details are not repeated here.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

Embodiments of the present invention also provide a communication system. The system includes the communication apparatus as the terminal device or the network device as described in the aforementioned embodiments in FIG. 19, or the system includes the measurement apparatus as the terminal device or the network device as described in the aforementioned embodiments in FIG. 20.

The present invention also provides a readable storage medium having stored therein instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

It can be understood that the phrase "a plurality of" in the present invention refers to two or more, and other quantifiers are similar thereto. The term "and/or" describes an association relationship of associated objects, indicating that three relationships may exist, for example, the expression "A and/or B" may include the following three cases: A alone, B alone, and both A and B. The character "/" generally indicates an "or" relationship of the associated objects. The singular forms "a/an", "said" and "the" are intended to include plural forms, unless clearly indicated in the context otherwise.

As used herein, the term "if" may be construed to mean "when" or "upon" or "in response to determining" depending on the context.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the measurement apparatus, and the values or representations of the parameters may also be other values or representations understandable by the measurement apparatus. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

**Claims**

1. A measurement method, performed by a terminal device, comprising:

   acquiring a measured value of a target measurement, wherein the target measurement comprises a beam failure detection (BFD); and
   determining a target event to be triggered by the terminal device according to the measured value and reference information corresponding to the target measurement, wherein the target event comprises a relaxation entry event or a relaxation exit event.

2. The method according to claim 1, wherein acquiring the measured value of the target measurement comprises:
   measuring a downlink reference signal of a serving cell of the terminal device to obtain the measured value.

3. The method according to claim 1 or 2, wherein the reference information is sent by a network device and is applicable to a primary serving cell and/or a secondary serving cell.

4. The method according to any one of claims 1 to 3, further comprising:
   determining a serving cell to which the reference information is applicable.

**5.** The method according to claim 4, wherein determining the serving cell to which the reference information is applicable comprises:
determining, according to a network device that sends the reference information, that the serving cell to which the reference information is applicable is a serving cell group corresponding to the network device.

**6.** The method according to claim 4, wherein determining the serving cell to which the reference information is applicable comprises:

receiving a notification sent by a network device, wherein the notification indicates a serving cell in which the target measurement is to be performed; and
determining that the serving cell to which the reference information is applicable is the serving cell in which the target measurement is to be performed.

**7.** The method according to claim 4, wherein determining the serving cell to which the reference information is applicable comprises:

determining the serving cell to which the reference information is applicable according to a protocol.

**8.** The method according to claim 4, wherein determining the serving cell to which the reference information is applicable comprises:
determining the serving cell to which the reference information is applicable according to indication information carried in the reference information; wherein the indication information indicates the serving cell to which the reference information is applicable.

**9.** The method according to any one of claims 1 to 4, wherein the reference information comprises a target period and a first difference threshold, and the measured value comprises at least one first reference signal receiving power (RSRP) obtained by measuring a downlink reference signal at least one time within the target period or obtained by measuring at least one downlink reference signal within the target period;
determining the target event to be triggered by the terminal device according to the measured value and the reference information corresponding to the target measurement comprises:

determining a first difference between each of the at least one first RSRP and a corresponding reference value; wherein the reference value corresponding to the first RSRP is measured by the terminal device before measuring the first RSRP; and
in response to the first difference corresponding to each of the at least one first RSRP being less than the first difference threshold, determining the target event being the relaxation entry event.

**10.** The method according to claim 9, wherein the measured value further comprises a plurality of second RSRPs obtained by measuring the downlink reference signal a plurality of times within a set duration after the target period or obtained by measuring a plurality of downlink reference signals within the set duration;
in response to the first difference corresponding to each of the at least one first RSRP being less than the first difference threshold, determining the target event being the relaxation entry event comprises:

in response to the first difference corresponding to each of a plurality of first RSRPs being less than the first difference threshold, determining a second difference between each of the plurality of second RSRPs and a corresponding reference value; and
in response to the second difference corresponding to each of the plurality of second RSRPs being less than the first difference threshold, determining the target event being the relaxation entry event.

**11.** The method according to any one of claims 1 to 4, wherein the reference information comprises a target period and a second difference threshold, and the measured value comprises at least one first reference signal receiving power (RSRP) obtained by measuring a downlink reference signal at least one time within the target period or obtained by measuring at least one downlink reference signal within the target period;
determining the target event to be triggered by the terminal device according to the measured value and the reference information corresponding to the target measurement comprises:

determining a first difference between each of the at least one first RSRP and a corresponding reference value; wherein the reference value corresponding to the first RSRP is measured by the terminal device before measuring the first RSRP; and
in response to existence of at least one first RSRP with the respective first difference being greater than or equal to the second difference threshold, determining the target event being the relaxation exit event.

**12.** The method according to claim 11, wherein the measured value further comprises a plurality of second RSRPs obtained by measuring the downlink reference signal a plurality of times within a set duration after the target period or obtained by measuring a plurality of downlink reference signals within the set duration;

in response to existence of at least one first RSRP with the respective first difference being greater than or equal to the second difference threshold, determining the target event being the relaxation exit event comprises:

> in response to existence of at least one first RSRP with the respective first difference being greater than or equal to the second difference threshold, determining a second difference between each of the plurality of second RSRPs and a corresponding reference value; and
> in response to existence of at least one second RSRP with the respective second difference being greater than or equal to the second difference threshold, determining the target event being the relaxation exit event.

13. The method according to claim 9 or 11, wherein the reference value is updated by:

> in response to the terminal device performing a cell handover, updating the corresponding reference value according to the first RSRP;
> in response to a difference obtained by subtracting the corresponding reference value from the first RSRP being greater than a third difference threshold, updating the corresponding reference value according to the first RSRP; or
> in response to the first difference corresponding to the first RSRP being not less than the first difference threshold within the target period, updating the corresponding reference value according to the first RSRP, or in response to the first difference corresponding to the first RSRP being less than the second difference threshold within the target period, updating the corresponding reference value according to the first RSRP.

14. The method according to claim 10 or 12, wherein the reference value is updated by:

> in response to the terminal device performing a cell handover, updating the corresponding reference value according to the second RSRP;
> in response to a difference obtained by subtracting the corresponding reference value from the second RSRP being greater than a third difference threshold, updating the corresponding reference value according to the first RSRP; or
> in response to the second difference corresponding to the second RSRP being not less than the first difference threshold within the set duration, updating the corresponding reference value according to the second RSRP, or in response to the second difference corresponding to the second RSRP being less than the second difference threshold within the set duration, updating the corresponding reference value according to the second RSRP.

15. The method according to any one of claims 5 to 14, wherein the reference information is applicable to a primary serving cell.

16. The method according to any one of claims 1 to 15, wherein the measured value comprises a plurality of first signal to interference plus noise ratios (SINRs) obtained by measuring a plurality of downlink reference signals, and the reference information comprises threshold indication information;

determining the target event to be triggered by the terminal device according to the measured value and the reference information corresponding to the target measurement comprises:

> determining a first quality threshold according to the threshold indication information; and
> in response to the plurality of first SINRs all being greater than the first quality threshold, determining the target event being the relaxation entry event; or in response to at least one of the plurality of first SINRs being greater than the first quality threshold, determining the target event being the relaxation entry event.

17. The method according to any one of claims 1 to 15, wherein the measured value comprises a plurality of first SINRs obtained by measuring a plurality of downlink reference signals, and the reference information comprises threshold indication information;

determining the target event to be triggered by the terminal device according to the measured value and the reference information corresponding to the target measurement comprises:

> determining a second quality threshold according to the threshold indication information; and
> in response to at least one of the plurality of first SINRs being less than or equal to the second quality threshold, determining the target event being the relaxation exit event; or in response to the plurality of first SINRs all being less than or equal to the second quality threshold, determining the target event being the relaxation exit event.

18. The method according to any one of claims 1 to 15, wherein the measured value comprises a plurality of second SINRs obtained by measuring each of a plurality of downlink reference signals a plurality of times within a set duration, and the reference information comprises threshold indication information; determining the target event to be triggered by the terminal device according to the measured value and the reference information corresponding to the target measurement comprises:

> determining a first quality threshold according to the threshold indication information; and
> in response to the plurality of second SINRs corresponding to each of the plurality of downlink reference signals all being greater than the first quality threshold, determining the target event being the relaxation entry event; or in response to the plurality of second SINRs corresponding to at least one of the plurality of downlink reference signals all being greater than the first quality threshold, determining the target event being the relaxation entry event.

19. The method according to any one of claims 1 to 15, wherein the measured value comprises a plurality of second SINRs obtained by measuring each of a plurality of downlink reference signals a plurality of times within a set duration, and the reference information comprises threshold indication information; determining the target event to be triggered by the terminal device according to the measured value and the reference information corresponding to the target measurement comprises:

> determining a second quality threshold according to the threshold indication information; and
> in response to the plurality of second SINRs corresponding to at least one of the plurality of downlink reference signals all being less than or equal to the second quality threshold, determining the target event being the relaxation exit event; or in response to the plurality of second SINRs corresponding to each of the plurality of downlink reference signals all being less than or equal to the second quality threshold, determining the target event being the relaxation exit event.

20. The method according to claim 4, further comprising: in serving cells to which the reference information is applicable, in response to existence of at least one serving cell for which the target event is the relaxation entry event or the relaxation exit event, sending a list of serving cells for which the target event is the relaxation entry event or the relaxation exit event to a network device.

21. The method according to claim 4, further comprising: in serving cells to which the reference information is applicable, in response to existence of at least one primary serving cell for which the target event is the relaxation entry event or the relaxation exit event, sending the relaxation entry event or the relaxation exit event to a network device.

22. The method according to claim 4, further comprising: in serving cells to which the reference information is applicable, in response to the target event corresponding to all of the serving cells being the relaxation entry event, sending the relaxation entry event to a network device.

23. The method according to claim 4, further comprising: in serving cells to which the reference information is applicable, in response to existence of at least one primary serving cell and at least one secondary serving cell for which the target event is the relaxation entry event, sending the relaxation entry event to a network device.

24. The method according to claim 4, further comprising: in serving cells to which the reference information is applicable, in response to existence of a secondary serving cell for which the target event is the relaxation exit event, sending the relaxation exit event to a network device.

25. The method according to any one of claims 20 to 24, wherein the relaxation entry event, the relaxation exit event or the list of serving cells is sent to the network device via UE assistance information (UAI) or a radio resource control (RRC) message.

26. A measurement method, performed by a network device, comprising: receiving a target event sent by a terminal device, wherein the target event is determined according to a measured value of a target measurement and reference information corresponding to the target measurement, the target measurement comprises a beam failure detection (BFD), and the target event comprises a relaxation entry event or a relaxation exit event.

27. The method according to claim 26, further comprising: before receiving the target event sent by the terminal device, sending the reference information to the terminal device.

28. The method according to claim 26 or 27, further comprising: in response to the target event being the relaxation entry event, sending a relaxation instruction to the terminal device, wherein the relaxation instruction is used to control the terminal device to enter a relaxation state.

**29.** The method according to claim 27, further comprising:

before sending the reference information to the terminal device, sending a notification to the terminal device, wherein the notification indicates a serving cell in which the target measurement is to be performed.

**30.** The method according to claim 27, wherein the reference information carries indication information, wherein the indication information indicates a serving cell to which the reference information is applicable.

**31.** The method according to claim 26, wherein the target event is carried in UE assistance information (UAI) or a radio resource control (RRC) message.

**32.** A measurement apparatus, applicable to a terminal device, comprising:

a processing unit, configured to acquire a measured value of a target measurement, wherein the target measurement comprises a beam failure detection (BFD);
wherein the processing unit is further configured to determine a target event to be triggered by the terminal device according to the measured value and reference information corresponding to the target measurement, wherein the target event comprises a relaxation entry event or a relaxation exit event.

**33.** A measurement apparatus, applicable to a network device, comprising:
a transceiving unit, configured to receive a target event sent by a terminal device, wherein the target event is determined according to a measured value of a target measurement and reference information corresponding to the target measurement, the target measurement comprises a beam failure detection (BFD), and the target event comprises a relaxation entry event or a relaxation exit event.

**34.** A measurement apparatus, comprising:

a processor; and
a memory, having stored therein a computer program,
wherein when the computer program is performed by the processor, the method according to any one of claims 1 to 25 or the method according to any one of claims 26 to 31 is performed.

**35.** A measurement apparatus, comprising:

a processor; and

an interface circuit for receiving a code instruction and transmitting the code instruction to the processor,
wherein the processor is used to run the code instruction to perform the method according to any one of claims 1 to 25 or the method according to any one of claims 26 to 31.

**36.** A computer-readable storage medium having stored therein a computer program that, when executed, causes the method according to any one of claims 1 to 25 or the method according to any one of claims 26 to 31 to be performed.

Communication system

┌─ 101          ┌─ 102

| network device ├─┤ terminal device |

FIG. 1

acquiring a measured value of a target measurement, the target measurement including a beam failure detection (BFD)                                     ⌐ 201

↓

determining a target event to be triggered by the terminal device according to the measured value and reference information corresponding to the target measurement, the target event including a relaxation entry event or a relaxation exit event                                     ⌐ 202

FIG. 2

performing a target measurement on a downlink reference signal of a serving cell of the terminal device to obtain the measured value, the target measurement being a beam failure detection (BFD)                                     ⌐ 301

↓

determining a target event to be triggered by the terminal device according to the measured value and reference information sent by a netword device, the target event including a relaxation entry event or a relaxation exit event                                     ⌐ 302

FIG. 3

acquiring a measured value of a target measurement                                     ⌐ 401

↓

determining a first difference between each of the at least one first RSRP and a corresponding reference value, the reference value corresponding to the first RSRP being measured by the terminal device before measuring the first RSRP                                     ⌐ 402

↓

in response to the first difference corresponding to each of the at least one first RSRP being less than the first difference threshold, determining the target event being the relaxation entry event                                     ⌐ 403

FIG. 4

acquiring a measured value of a target measurement — 501

determining a first difference between each of the at least one first RSRP and a corresponding reference value, the reference value corresponding to the first RSRP being measured by the terminal device before measuring the first RSRP — 502

in response to the first difference corresponding to each of the at least one first RSRP being less than the first difference threshold, determining a second difference between each of a plurality of second RSRPs and a corresponding reference value, the reference value corresponding to the second RSRP being measured by the terminal device before measuring the second t RSRP — 503

in response to the second difference corresponding to each of the plurality of second RSRPs being less than the first difference threshold, determining the target event to be triggerd by the terminal device being the relaxation entry event — 504

FIG. 5

acquiring a measured value of a target measurement — 601

determining a first difference between each of the at least one first RSRP and a corresponding reference value, the reference value corresponding to the first RSRP being measured by the terminal device before measuring the first RSRP — 602

in response to existence of at least one first RSRP with the respective first difference being greater than or equal to the second difference threshold in the reference information, determining the target event to be triggerd by the terminal device being the relaxation exit event — 603

FIG. 6

acquiring a measured value of a target measurement — 701

determining a first difference between each of the at least one first RSRP and a corresponding reference value, the reference value corresponding to the first RSRP being measured by the terminal device before measuring the first RSRP — 702

in response to existence of at least one first RSRP with the respective first difference being greater than or equal to the second difference threshold in the reference information, determining a second difference between each of the plurality of second RSRPs and a corresponding reference value, the reference value corresponding to the second RSRP being measured by the terminal device before measuring the second RSRP — 703

in response to existence of at least one second RSRP with the respective second difference being greater than or equal to the second difference threshold, determining the target event to be triggerd by the terminal device being the relaxation exit event — 704

FIG. 7

acquiring a measured value of a target measurement, the target measurement including a beam failure detection (BFD), and the measured value including a plurality of first SINRs obtained by measuring a plurality of downlink reference signals — 801

determining a first quality threshold according to threshold indication information in the reference information corresponding to the target measurement — 802

in response to the plurality of first SINRs all being greater than the first quality threshold, determining the target event being the relaxation entry event; or in response to at least one of the plurality of first SINRs being greater than the first quality threshold, determining the target event being the relaxation entry event — 803

FIG. 8

acquiring a measured value of a target measurement, the target measurement including a beam failure detection (BFD), and the measured value including a plurality of first SINRs obtained by measuring a plurality of downlink reference signals — 901

determining a second quality threshold according to threshold indication information in the reference information corresponding to the target measurement — 902

in response to at least one of the plurality of first SINRs being less than or equal to the second quality threshold, determining the target event to be triggered by the terminal device being the relaxation exit event; or in response to the plurality of first SINRs all being less than or equal to the second quality threshold, determining the target event being the relaxation exit event — 903

FIG. 9

acquiring a measured value of a target measurement, the target measurement including a beam failure detection (BFD), and the measured value including a plurality of second SINRs obtained by measuring each of a plurality of downlink reference signals a plurality of times within a set duration — 1001

determining a first quality threshold according to threshold indication information in the reference information corresponding to the target measurement — 1002

in response to the plurality of second SINRs corresponding to each of the plurality of downlink reference signals all being greater than the first quality threshold, determining the target event to be triggered by the terminal device being the relaxation entry event; or in response to the plurality of second SINRs corresponding to at least one of the plurality of downlink reference signals all being greater than the first quality threshold, determining the target event being the relaxation entry event — 1003

FIG. 10

acquiring a measured value of a target measurement, the target measurement including a beam failure detection (BFD), and the measured value including a plurality of second SINRs obtained by measuring each of a plurality of downlink reference signals a plurality of times within a set duration — 1101

determining a second quality threshold according to threshold indication information in the reference information corresponding to the target measurement — 1102

in response to the plurality of second SINRs corresponding to at least one of the plurality of downlink reference signals all being less than or equal to the second quality threshold, determining the target event to be triggered by the terminal device being the relaxation exit event; or in response to the plurality of second SINRs corresponding to each of the plurality of downlink reference signals all being less than or equal to the second quality threshold, determining the target event being the relaxation exit event — 1103

FIG. 11

acquiring a measured value of a target measurement, and the target measurement including a beam failure detection (BFD) — 1201

determining a target event according to the measured value and reference information corresponding to the target measurement — 1202

in serving cells to which the reference information is applicable, in response to existence of at least one serving cell for which the target event is the relaxation entry event or the relaxation exit event, sending a list of serving cells for which the target event is the relaxation entry event or the relaxation exit event to a network device — 1203

FIG. 12

acquiring a measured value of a target measurement, and the target measurement including a beam failure detection (BFD) — 1301

determining a target event according to the measured value and reference information corresponding to the target measurement — 1302

in serving cells to which the reference information is applicable, in response to existence of at least one primary serving cell for which the target event is the relaxation entry event or the relaxation exit event, sending the relaxation entry event or the relaxation exit event to a network device — 1303

FIG. 13

acquiring a measured value of a target measurement, and the target measurement including a beam failure detection (BFD) — 1401

determining a target event according to the measured value and reference information corresponding to the target measurement — 1402

in serving cells to which the reference information is applicable, in response to the target event corresponding to all of the serving cells being the relaxation entry event, sending the relaxation entry event to a network device — 1403

FIG. 14

acquiring a measured value of a target measurement, and the target measurement including a beam failure detection (BFD) — 1501

determining a target event according to the measured value and reference information corresponding to the target measurement — 1502

in serving cells to which the reference information is applicable, in response to existence of at least one primary serving cell and at least one secondary serving cell for which the target event is the relaxation entry event, sending the relaxation entry event to a network device — 1503

FIG. 15

acquiring a measured value of a target measurement, and the target measurement including a beam failure detection (BFD) — 1601

determining a target event according to the measured value and reference information corresponding to the target measurement — 1602

in serving cells to which the reference information is applicable, in response to existence of a secondary serving cell for which the target event is the relaxation exit event, sending the relaxation exit event to a network device — 1603

FIG. 16

receiving a target event sent by a terminal device, the target event being determined according to a measured value of a target measurement and reference information corresponding to the target measurement, the target measurement including a beam failure detection (BFD), and the target event including a relaxation entry event or a relaxation exit event — 1701

FIG. 17

180

measurement apparatus

processing unit — 1801

transceiving unit — 1802

FIG. 18

measurement apparatus 190

1901

1902 — memory

1903 — computer program

processor

transceiver — 1905

antenna

interface circuit — 1907

1906

FIG. 19

memory — 2003

interface — 2002

bus

processor — 2001

FIG. 20

## INTERNATIONAL SEARCH REPORT

| | International application No. |
|---|---|
| | **PCT/CN2022/076240** |

### A. CLASSIFICATION OF SUBJECT MATTER

H04W 24/00(2009.01)i; H04W 76/00(2018.01)i; H04W 52/02(2009.01)i; H04W 24/08(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; ENTXT; 3GPP: relax+, measure+, bfd, beam, failure, rsrp, sinr, threshold, release, 放松, 松弛, 宽松, 测量, 波束, 失败, 阈值, 门限

### C. DOCUMENTS CONSIDERED TO BE RELEVANT

| Category* | Citation of document, with indication, where appropriate, of the relevant passages | Relevant to claim No. |
|---|---|---|
| X | CN 113993188 A (HUAWEI TECHNOLOGIES CO., LTD.) 28 January 2022 (2022-01-28) description, paragraphs 120-124, 147-159, and 190-191 | 1-15, 20-36 |
| Y | CN 113993188 A (HUAWEI TECHNOLOGIES CO., LTD.) 28 January 2022 (2022-01-28) description, paragraphs 120-124, 147-159, and 190-191 | 16-19 |
| Y | MEDIATECK INC. ""Email discussion summary for [100-e][228] NR_UE_pow_sav_enh_RRM"" *3GPP TSG-RAN WG4 Meeting,* 03 November 2021 (2021-11-03), section 2.1 | 16-19 |
| X | WO 2021254590 A1 (NOKIA TECHNOLOGIES OY) 23 December 2021 (2021-12-23) description, paragraphs 56-72 | 1-36 |
| A | WO 2021159343 A1 (HUAWEI TECHNOGOLY CO., LTD.) 19 August 2021 (2021-08-19) entire document | 1-36 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2022** | **10 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/076240**

| Patent document cited in search report | | | Publication date (day/month/year) | Patent family member(s) | | | Publication date (day/month/year) |
|---|---|---|---|---|---|---|---|
| CN | 113993188 | A | 28 January 2022 | WO | 2022022329 | A1 | 03 February 2022 |
| WO | 2021254590 | A1 | 23 December 2021 | None | | | |
| WO | 2021159343 | A1 | 19 August 2021 | None | | | |

Form PCT/ISA/210 (patent family annex) (January 2015)